# EUROPEAN PATENT APPLICATION

(11) **EP 4 712 461 A1**
(43) Date of publication of application: **18.03.2026**
(21) Application number: 24803293.0
(22) Date of filing: 26.03.2024
(51) Int. Cl.: H04N 7/14, G06Q 10/00, G06Q 50/10

(54) **INFORMATION PROCESSING DEVICE, PROGRAM, AND INFORMATION PROCESSING METHOD**

(30) Priority: 10.05.2023 JP 2023077810
(71) Applicant: Sony Group Corporation, Tokyo 108-0075 (JP)
(72) Inventor: KATSU, Masanori, Tokyo 108-0075 (JP); OCHIAI, Kazuki, Tokyo 108-0075 (JP); GOTO, Yuki, Tokyo 108-0075 (JP)
(74) Representative: MFG Patentanwälte Meyer-Wildhagen Meggle-Freund Gerhard PartG mbB
(86) International application number: PCT/JP2024/011967
(87) International publication number: WO 2024/232178

(57) **Abstract**

Provided is a technology that contributes to convenience of a user in a remote interview and improvement of the quality of the interview.

An information processing apparatus comprising a control unit that performs control to notify a talker of a state of the talker related to a degree of a satisfaction level in accordance with the satisfaction level regarding a call of the talker, the satisfaction level being estimated on a basis of sensing data regarding the talker performing the call.

## Description

### TECHNICAL FIELD

The present disclosure relates to an information processing apparatus, a program, and an information processing method.

### BACKGROUND ART

In recent years, a remote interview in which a sales representative has an interview with a customer using an online video call, voice call, or the like has been widely used in sales activities of products, services, or the like. Therefore, various techniques for supporting a remote interview of a sales representative have been studied. For example, Patent Document 1 discloses a technique for determining a person in charge of business negotiation on the basis of registration information such as the age, gender, and department to which the business partner belongs.

### CITATION LIST

### PATENT DOCUMENT

Patent Document 1: Japanese Patent Application Laid-Open No. 2020-091824

### SUMMARY OF THE INVENTION

### PROBLEMS TO BE SOLVED BY THE INVENTION

In the sales activities by the remote interview as described above, there is a case where it is difficult for the sales representative side to grasp the state or reaction of the customer as compared with the interview performed in person.

### SOLUTIONS TO PROBLEMS

In order to solve the above problem, according to an aspect of the present disclosure, there is provided an information processing apparatus including a control unit that performs control to notify a talker of a state of the talker related to a degree of a satisfaction level in accordance with the satisfaction level regarding a call of the talker, the satisfaction level being estimated on the basis of sensing data regarding the talker performing the call.

Furthermore, according to the present disclosure, there is provided a program for causing a computer to function as a control unit that performs control to notify a talker of a state of the talker related to a degree of a satisfaction level in accordance with the satisfaction level regarding a call of the talker, the satisfaction level being estimated on the basis of sensing data regarding the talker performing the call.

Furthermore, according to the present disclosure, there is provided an information processing method executed by a computer, including performing control to notify a talker of a state of the talker related to a degree of a satisfaction level in accordance with the satisfaction level regarding a call of the talker, the satisfaction level being estimated on the basis of sensing data regarding the talker performing the call.

### BRIEF DESCRIPTION OF DRAWINGS

Fig. 1 is an explanatory diagram illustrating a configuration example of an information processing system according to one embodiment of the present disclosure.
Fig. 2 is a block diagram illustrating a configuration example of a talker terminal 10 according to a first embodiment of the present disclosure.
Fig. 3 is a block diagram illustrating a functional configuration example of an information processing apparatus 20 according to the first embodiment of the present disclosure.
Fig. 4 is a diagram illustrating a video reproduction screen example generated by a control unit 230.
Fig. 5 is a diagram illustrating an example of a call screen generated by a control unit 230.
Fig. 6 is a diagram illustrating an example of a call screen and a notification display generated by a control unit 230.
Fig. 7 is a diagram illustrating another example of the call screen and the notification display of the degree of busyness generated by the control unit 230.
Fig. 8 is a diagram illustrating an example of a notification display illustrating information regarding a speaking time generated by a control unit 230.
Fig. 9 is a diagram illustrating a setting reception screen example of a remote interview partner, a purpose, and a scheduled time generated by a control unit 230.
Fig. 10 is a flowchart for explaining an operation example in a learning stage of a dissatisfaction estimation model of the information processing system according to the present embodiment.
Fig. 11 is a second flowchart illustrating an operation example in the learning stage of the dissatisfaction cause state detection model of the information processing system according to the present embodiment.
Fig. 12 is a flowchart illustrating an operation example in an inference stage of a dissatisfaction cause state of the information processing system according to the present embodiment.
Fig. 13 is a block diagram illustrating a functional configuration example of an information processing apparatus 21 according to a second embodiment of the present disclosure.
Fig. 14 is a diagram illustrating an example of a video reproduction screen generated by a control unit 231.
Fig. 15 is a diagram illustrating another example of the video reproduction screen generated by the control unit 231.
Fig. 16 is a diagram illustrating an example of a call summary screen generated by a control unit 231.
Fig. 17 is a flowchart illustrating an operation example of the information processing system according to the second embodiment of the present disclosure.
Fig. 18 is a block diagram illustrating a functional configuration example of an information processing apparatus 22 according to a third embodiment of the present disclosure.
Fig. 19 is a diagram illustrating an example of a parameter setting reception screen related to conversion of a face image and sound by a control unit 232.
Fig. 20 is a diagram illustrating an example of a call screen and a notification display generated by a control unit 232.
Fig. 21 is a flowchart for explaining an operation example of an information processing system according to a third embodiment of the present disclosure.
Fig. 22 is a block diagram illustrating a functional configuration example of an information processing apparatus 23 according to a fourth embodiment of the present disclosure.
Fig. 23 is a diagram illustrating an example of a doctor side standby screen generated by the control unit 233.
Fig. 24 is a diagram illustrating an example of a sales side standby screen generated by the control unit 233.
Fig. 25 is a diagram illustrating an example of a waiting room screen generated by the control unit 233.
Fig. 26 is a diagram illustrating an example of a sales side standby screen generated by the control unit 233.
Fig. 27 is a diagram illustrating an example of a sales side standby screen generated by the control unit 233 and a notification display regarding a waiting time.
Fig. 28 is a diagram illustrating an example of an information exchange desiring person standby screen generated by the control unit 233.
Fig. 29 is a diagram illustrating an example of an information exchange wish notification screen generated by the control unit 233.
Fig. 30 is a diagram illustrating another example of the doctor side standby screen generated by the control unit 233.
Fig. 31 is an example of a notification priority setting screen generated by the control unit 233.
Fig. 32 is a diagram illustrating an example of a notification screen generated by the control unit 233, the notification screen indicating that an interview by a doctor is possible.
Fig. 33 is a diagram illustrating an example of a notification screen generated by the control unit 233.
Fig. 34 is a diagram illustrating an example of a post-interview evaluation questionnaire screen generated by the control unit 233.
Fig. 35 is a diagram illustrating another example of the post-interview evaluation questionnaire screen generated by the control unit 233.
Fig. 36 is a first flowchart illustrating an operation example of the information processing system according to the fourth embodiment.
Fig. 37 is a second flowchart illustrating an operation example of the information processing system according to the fourth embodiment.
Fig. 38 is a flowchart for explaining an operation example of the present information processing system related to an information exchange function between salespersons according to the fourth embodiment of the present disclosure.
Fig. 39 is a block diagram illustrating a hardware configuration 90 according to one embodiment of the present disclosure.

### MODE FOR CARRYING OUT THE INVENTION

Hereinafter, preferred embodiments of the present disclosure will be described in detail with reference to the accompanying drawings. Note that, in the present specification and the drawings, components having substantially the same functional configuration are denoted by the same reference signs, and redundant description is omitted.

In addition, in the present specification and the drawings, a plurality of components having substantially the same functional configuration may be distinguished by attaching different numbers or alphabets after the same reference sign. However, in a case where it is not necessary to particularly distinguish each of the plurality of components having substantially the same functional configuration, only the same reference sign is attached to each of the plurality of components.

Note that the description will be given in the following order.
<1. First Embodiment>
   <1-1. Overview>
   <1-2. System Configuration Example>
   <1-3. Functional Configuration Example>
   <1-4. Operation Example>
<2. Second Embodiment>
   <2-1. Overview>
   <2-2. Functional Configuration Example>
   <2-3. Operation Example>
<3. Third Embodiment>
   <3-1. Overview>
   <3-2. Functional Configuration Example>
   <3-3. Operation Example>
<4. Fourth Embodiment>
   <4-1. Overview>
   <4-2. Functional Configuration Example>
   <4-3. Operation Example>
<5. Hardware Configuration Example>
<6. Summary>

### <1. First Embodiment>

### <1-1. Overview>

First, an overview of a first embodiment of the present disclosure will be described.

As described above, in recent years, sales activities by remote interview such as an interview using video call or an interview using voice call have been performed. With remote interviews, it is possible to perform the interview even in a case where the customer and the sales representative are at remote locations.

In a remote interview, in general, what a salesperson can see and hear during the interview is a video of a customer including a face of the customer and a speech voice. Alternatively, when the video is off, what the salesperson can hear during the interview is the speech voice of the customer.

Therefore, in the remote interview, it may be difficult for a sales representative (hereinafter, also referred to as salesperson) to grasp the state or reaction during the interview with the customer, as compared with a case where the interview is performed in person. For this reason, it may be difficult for the salesperson to take flexible measures such as changing how to proceed with the interview according to the customer's reaction.

A technical idea according to one embodiment of the present disclosure has been conceived by focusing on the above points, and provides a technology that improves convenience of a user and contributes to further improvement of an interview quality in a remote interview.

For this purpose, the information processing apparatus 20 according to one embodiment of the present disclosure performs control to notify the talker of a state of the talker related to a degree of the satisfaction level in accordance with the satisfaction level regarding the call of the talker estimated on the basis of the sensing data regarding the talker who is making the call.

The talker may include a first talker and a second talker that performs sales activities of either or both of a product or a service on the first talker. As an example, the first talker may be a customer. Further, the second talker may be a salesperson.

The information processing apparatus 20 may perform control to notify the second talker of the state of the second talker related to the degree of the satisfaction level of the first talker in accordance with the satisfaction level regarding the call of the first talker estimated on the basis of the sensing data regarding the first talker.

For example, the information processing apparatus 20 may perform control to notify the second talker of the state of the second talker in a case where the satisfaction level of the first talker is lower than the reference value on the basis of the sensing data regarding the second talker.

At this time, the information processing apparatus 20 may perform control to notify the second talker of the state of the second talker in a predetermined time section from the time when the satisfaction level of the first talker is lower than the reference value.

The sensing data regarding the talker may include any one or both of time-series data of video around the talker including the face of the talker as the subject and time-series data of sound around the talker including the voice of the talker. Meanwhile, the sensing data regarding the talker is not limited to the above, and may widely include sensing data acquired by various sensors.

By performing the processing as described above, the information processing apparatus 20 can notify the sales representative in a case where the satisfaction level of the customer is lower than the reference value in the remote interview. Therefore, the salesperson can more easily grasp the situation of the customer in the remote interview. In addition, on the basis of the notification, the salesperson can conduct an interview according to the situation of the customer, such as changing how to proceed with the interview.

Furthermore, in a case where the satisfaction level of the first talker is lower than the reference value, the information processing apparatus 20 may analyze the state of the second talker on the basis of the sensing data regarding the second talker. Further, the information processing apparatus 20 may output the state of the second talker obtained as a result of the analysis as the dissatisfaction cause state.

Furthermore, in a case where the information processing apparatus 20 detects that the state of the second talker is the dissatisfaction cause state on the basis of the sensing data regarding the second talker while the call is being made, the information processing apparatus 20 may perform control to notify the second talker of the dissatisfaction cause state.

The dissatisfaction cause state may be, for example, information indicating a state of the second talker, such as an expression of the second talker, a body motion such as a gesture, clothes, a speech content, or a tone of a speech voice.

By performing the processing as described above, the information processing apparatus 20 analyzes the state of the sales representative when the satisfaction level of the customer becomes lower than the reference value in the remote interview, and can estimate the state of the sales representative that leads to a factor of lowering the satisfaction level of the customer.

Furthermore, by performing the processing as described above, the information processing apparatus 20 can notify the sales representative in a case where the state of the sales representative becomes the dissatisfaction cause state during the remote interview.

As a result, in the remote interview, the sales representative can notice his/her own state that causes a decrease in the satisfaction level of the customer and respond flexibly. In addition, even after the end of the interview, the sales representative can notice his/her own state that may affect the satisfaction level of the customer, look back on the interview, and lead to improvement in the technology of the interview.

Furthermore, the information processing apparatus 20 may calculate presence or absence of an utterance of each of the first talker and the second talker and a speaking time indicating a length of a time of each utterance on the basis of the sensing data regarding the talker.

The information processing apparatus 20 may perform control to notify the second talker of information regarding the length of time during which each of the first talker and the second talker is speaking on the basis of the speaking time obtained as a result of the calculation.

By performing the processing as described above, the information processing apparatus 20 can notify the sales representative of how much a ratio of speech of each of the customer and the sales representative is in the remote interview. As a result, the sales representative can prevent only one of the customer and the sales representative from speaking too much, and the satisfaction level of the customer from being lowered.

Furthermore, while a call is being made, the information processing apparatus 20 may determine the degree of busyness of the first talker according to the situation of the surrounding environment of the first talker estimated on the basis of the sensing data regarding the first talker.

The information processing apparatus 20 may perform control to notify the second talker of information regarding the busyness of the first talker according to the result of the determination described above.

By performing the processing as described above, the information processing apparatus 20 can notify the sales representative in a case where it is estimated that the customer may be busy during the remote interview. As a result, the sales representative can consider the situation of the customer by checking whether there is no problem in continuing the call to the customer or resetting the interview to another schedule.

As described above, according to the information processing system according to the present disclosure, the convenience of the user (customer and sales representative) in the remote interview is improved. Therefore, the present information processing system can contribute to improvement in quality of an interview in a remote interview.

Hereinafter, a system configuration example for realizing the above will be described in detail. Note that, in the present specification, as an example of an application destination of the information processing system according to the present disclosure, an example in which a medical information representative (medical representative, hereinafter referred to as MR) who is a salesperson makes a video call with a doctor who is a customer will be mainly described.

### <1-2. System Configuration Example>

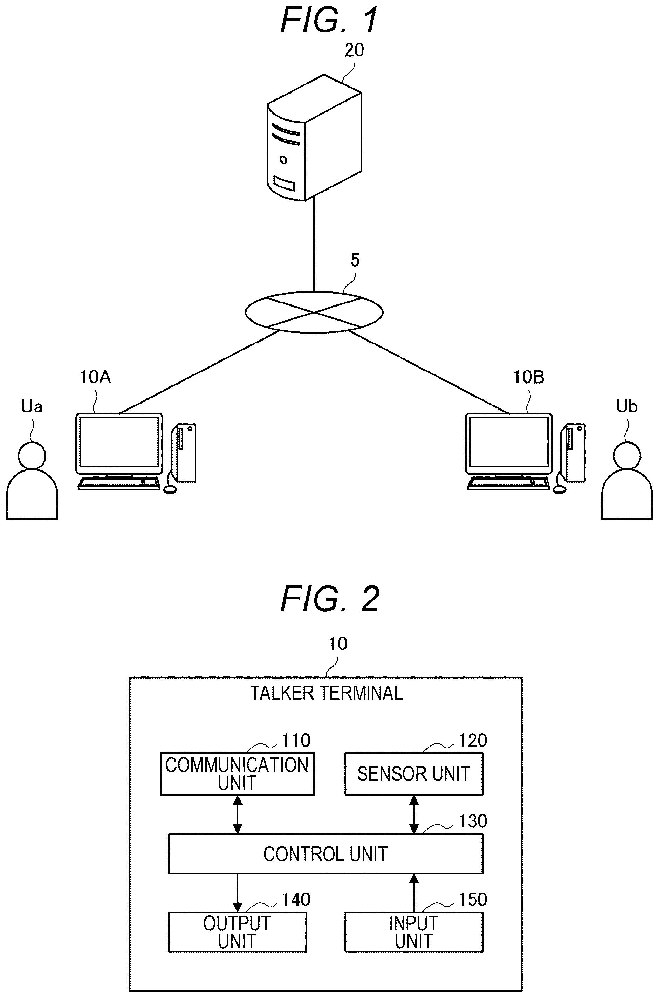

Fig. 1 is an explanatory diagram illustrating a configuration example of an information processing system according to one embodiment of the present disclosure.

As illustrated in Fig. 1, an information processing system according to one embodiment of the present disclosure includes a plurality of talker terminals 10 and an information processing apparatus 20.

Each of the talker terminals 10 and the information processing apparatus 20 is communicably connected to each other via a network 30.

Note that Fig. 1 illustrates a case where the information processing system according to the present embodiment includes two talker terminals 10 of the talker terminal 10A and the talker terminal 10B, but the number of talker terminals 10 according to the present embodiment is not particularly limited. For example, the information processing system according to the present embodiment may include three or more talker terminals 10.

### (Talker Terminal 10)

The talker terminal 10 according to the present embodiment is an information terminal used by the talker U. The customer Ua is an example of a first talker. The customer Ua is, for example, a doctor. In addition, the salesperson Ub is an example of a second talker. The salesperson Ub is, for example, an MR.

The talker terminal 10 has a function of making a call such as a video call or a voice call by communicating with another talker terminal 10 via the information processing apparatus 20. The customer Ua and the salesperson Ub can perform remote interview by video call using the talker terminal 10A or the talker terminal 10B, respectively.

Each of the talker terminals 10 includes various sensors such as a camera and a microphone, and acquires video and audio of each of the customer Ua and the salesperson Ub. The talker terminal 10 transmits the acquired video and audio to the information processing apparatus 20.

Further, the talker terminal 10 may include a sensor other than the camera and the microphone. For example, the talker terminal 10 may include a sensor that acquires biological information of the talker U, such as a heart rate sensor that is worn on an arm of the salesperson Ub and measures a heart rate (pulse rate). In this case, the talker terminal 10 may transmit various types of acquired sensing data to the information processing apparatus 20 in response to a request from the information processing apparatus 20.

In addition, the talker terminal 10 receives, from the information processing apparatus 20, the call screen and the voice data including the video and the voice of another talker U who is the call partner. The talker terminal 10 displays a call screen and outputs a voice under the control of the information processing apparatus 20.

In the example illustrated in Fig. 1, the talker terminal 10 is realized by a personal computer (PC), but the talker terminal 10 may be realized by another information processing terminal. For example, the talker terminal 10 may be realized by a smartphone, a tablet terminal, a game machine, a wearable device, or the like.

### (Information Processing Apparatus 20)

The information processing apparatus 20 according to the present embodiment performs control to notify the talker of the state of the talker related to the degree of the satisfaction level of the talker U according to the satisfaction level regarding the call of the talker U estimated on the basis of the sensing data regarding the talker U such as the video and the voice of the talker U received from the talker terminal 10.

In the example illustrated in Fig. 1, the information processing apparatus 20 estimates the satisfaction level regarding the call of the customer Ua on the basis of the video and voice of the customer Ua who is a doctor received from the talker terminal 10A.

Furthermore, in a case where the estimated degree of the satisfaction level of the customer Ua is lower than the reference value, the information processing apparatus 20 analyzes the state of the salesperson Ub on the basis of the sensing data regarding the salesperson Ub, which is the MR, received from the talker terminal 10B. The information processing apparatus 20 outputs the state of the salesperson Ub obtained as a result of the analysis as the dissatisfaction cause state.

The information processing apparatus 20 learns the relationship between the output dissatisfaction cause state and the video of the salesperson Ub by machine learning, and detects whether or not the salesperson Ub is in the dissatisfaction cause state from the video of the salesperson Ub while a call is being made between the talker terminal 10A and the talker terminal 10B using the model obtained as a result of the learning.

In a case of detecting that the state of the salesperson Ub is the dissatisfaction cause state during a call, the information processing apparatus 20 performs control to notify the talker terminal 10B used by the salesperson Ub.

More specifically, for example, the information processing apparatus 20 may perform control to display the notification words or the notification image indicating that the salesperson Ub is in the dissatisfaction cause state in the notification region on the call screen including the video of the customer Ua displayed on the talker terminal 10B.

Furthermore, the information processing apparatus 20 analyzes either or both of the video data and the voice data received from the talker terminal 10A and the talker terminal 10B, thereby calculating the presence or absence of utterance of each of the customer Ua and the salesperson Ub, and the speaking time indicating the length of time of each utterance.

The information processing apparatus 20 performs control to notify the salesperson Ub of information regarding the length of time during which each of the customer Ua and the salesperson Ub is speaking, on the basis of the speaking time obtained as a result of the calculation.

Furthermore, the information processing apparatus 20 analyzes either or both of the video and the voice of the customer Ua while the call is being made, thereby determining the degree of busyness of the customer Ua according to the situation of the surrounding environment of the customer Ua.

The information processing apparatus 20 performs control to notify the salesperson Ub of information regarding the busyness of the customer Ua according to the determination result.

### (Network 5)

The network 5 according to the present embodiment mediates communication between the talker terminal 10 and the information processing apparatus 20.

### <1-3. Functional Configuration Example>

Next, functional configuration examples of the talker terminal 10 and the information processing apparatus 20 constituting the present information processing system that realizes the above will be described in detail.

### <1-3-1. Talker Terminal 10>

Fig. 2 is a block diagram illustrating a configuration example of the talker terminal 10 according to the first embodiment of the present disclosure.

As illustrated in Fig. 2, the talker terminal 10 according to the present embodiment may include a communication unit 110, a sensor unit 120, a control unit 130, an output unit 140, and an input unit 150.

### (Communication Unit 110)

The communication unit 110 according to the present embodiment communicates with the information processing apparatus 20 via the network 5.

Under the control of the control unit 130, the communication unit 110 transmits and receives various types of data related to a call made with another talker terminal 10 to and from the information processing apparatus 20.

For example, the communication unit 110 transmits the video data of the talker U acquired by the sensor unit 120 to the information processing apparatus 20. In addition, the communication unit 110 transmits the voice data of the talker U acquired by the sensor unit 120 to the information processing apparatus 20.

Furthermore, in response to a request from the information processing apparatus 20, the communication unit 110 may transmit, to the information processing apparatus 20, various types of sensing data regarding the talker U other than video or audio acquired by the sensor unit 120.

Furthermore, the communication unit 110 receives, from the information processing apparatus 20, data of a call screen including a video of another talker U as a call partner. Furthermore, the communication unit 110 receives the voice data of the other talker U from the information processing apparatus 20.

Furthermore, the communication unit 110 may receive, from the information processing apparatus 20, an operation instruction related to display control of the call screen and output control of the voice of another talker U.

### (Sensor Unit 120)

The sensor unit 120 is realized by various sensors that acquire sensing data regarding the talker U using the talker terminal 10.

For example, the sensor unit 120 may include a camera that acquires a video of the talker U. In this case, the sensor unit 120 acquires a video around the talker U including the face of the talker U as the subject as the sensing data regarding the talker U.

Hereinafter, in the present specification, the video around the talker U including the video of the face of the talker U acquired by the sensor unit 120 is also referred to as a "video of the talker U". The video of the talker U may be time-series data including a plurality of frames associated with the imaging time.

Furthermore, the sensor unit 120 may include a microphone that acquires the voice of the talker U. Such a sensor unit 120 further acquires time-series data of sound around the talker U including the voice of the talker U as the sensing data regarding the talker U.

Hereinafter, in the present specification, the sound around the talker U including the voice of the talker U acquired by the sensor unit 120 is also referred to as "voice of the talker U".

### (Control Unit 130)

The control unit 130 has a function of controlling the overall operation of the talker terminal 10.

For example, the control unit 130 performs control to cause the communication unit 110 to transmit and receive, to and from the information processing apparatus 20, various kinds of data related to a call made with another talker terminal 10. As an example, the control unit 130 causes the communication unit 110 to transmit the video and the voice of the talker U to the information processing apparatus 20.

### (Output Unit 140)

The output unit 140 is realized by an output apparatus that outputs various types of information under the control of the control unit 130.

For example, the output unit 140 is realized by including a display apparatus capable of visually outputting various types of information. Under the control of the control unit 130, such an output unit 140 displays a call screen including a video of another talker U of the call partner received by the communication unit 110.

Furthermore, the output unit 140 is realized by including an audio output apparatus such as a speaker that outputs sound. Such an output unit 140 outputs the voice of another talker U of the call partner under the control of the control unit 130.

### (Input Unit 150)

The input unit 150 has a function of receiving input of various types of information by the talker U.

For example, the input unit 150 may receive input of information of another talker U as the other partner of the call.

The input unit 150 can be realized by, for example, an input apparatus such as a keyboard or a mouse. Furthermore, the input unit 150 may be realized as a touch panel. In this case, the input unit 150 may be configured integrally with the output unit 140.

The configuration example of the talker terminal 10 according to the present embodiment has been described above. Note that the configuration described above with reference to Fig. 2 is merely an example, and the configuration of the talker terminal 10 according to the present embodiment is not limited to such an example.

The configuration of the talker terminal 10 according to the present embodiment can be flexibly modified according to specifications and operations.

### <1-3-1. Information Processing Apparatus 20>

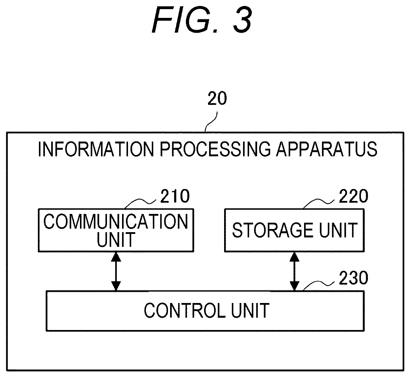

Fig. 3 is a block diagram illustrating a functional configuration example of the information processing apparatus 20 according to the first embodiment of the present disclosure.

### (Communication Unit 210)

The communication unit 210 according to the present embodiment has a function of communicating with another apparatus. For example, the communication unit 210 receives sensing data regarding the talker U from the talker terminal 10.

More specifically, for example, the communication unit 210 receives the video data of the talker U from the talker terminal 10. Further, the communication unit 210 receives the voice of the talker U from the talker terminal 10.

In addition, under the control of the control unit 230, the communication unit 210 transmits, to the talker terminal 10, a call screen including a video of another talker U of the call partner of the talker terminal 10 displayed on the talker terminal 10. In addition, the communication unit 210 transmits the voice of the other talker U to the talker terminal 10.

### (Storage Unit 220)

The storage unit 220 stores a program and data for operating the control unit 230. Furthermore, the storage unit 220 can also temporarily store various data required in the process of the operation of the control unit 230.

For example, the storage unit 220 stores various data obtained as a result of analysis of the video of the talker U performed by the control unit 230 described later.

### (Control Unit 230)

The control unit 230 controls the overall operation of the information processing apparatus 20. For example, the control unit 230 controls communication between the communication unit 210 and the talker terminal 10.

Furthermore, the control unit 230 may generate a call screen to be displayed on the talker terminal 10 on the basis of the video and audio data of the talker U received from the talker terminal 10. The control unit 230 may perform control to cause the communication unit 210 to transmit the generated call screen and the operation instruction related to the display of the call screen to the talker terminal 10.

In addition, the control unit 230 according to the present embodiment performs control to notify the talker of the state of the talker U related to the degree of the satisfaction level in accordance with the satisfaction level regarding the call of the talker U estimated on the basis of the sensing data regarding the talker U making a call.

### (Dissatisfaction Estimation Processing)

More specifically, the control unit 230 according to the present embodiment may estimate the satisfaction level regarding the call of the customer Ua on the basis of the video of the customer Ua.

The control unit 230 may learn the relationship between the video of the customer Ua and the information indicating the satisfaction level of the customer Ua by machine learning. The control unit 230 may estimate the satisfaction level of the customer Ua on the basis of the video of the customer Ua using the model (hereinafter, referred to as a dissatisfaction estimation model) obtained as a result of the learning.

The control unit 230 acquires the video data of the customer Ua received from the talker terminal 10 in the learning stage of the dissatisfaction estimation model. Furthermore, in addition to the video of the customer Ua at the time of the remote interview actually held between the customer Ua and the salesperson Ub, the control unit 230 may acquire a video of the customer role Uc at the time of the remote interview for practice held by the salesperson Ub with another talker U (hereinafter, defined as a customer role Uc) serving as the customer role in practice.

The control unit 230 performs processing of assigning a label to a frame at a time when discomfort or dissatisfaction of the customer Ua or the customer role Uc appears in the acquired video of the customer Ua or the video of the customer role Uc.

For example, the control unit 230 may perform processing of assigning a label by receiving an operation of assigning a label to the video data of the customer Ua or the video data of the customer role Uc by the administrator of the information processing apparatus 20.

Alternatively, the control unit 230 may quantify the satisfaction level of the customer Ua or the customer role Uc by analyzing the expression of the customer Ua or the customer role Uc from the video of the customer Ua or the customer role Uc using a known method of analyzing the human expression from the video.

For example, the control unit 230 may calculate the satisfaction level of the customer Ua or the customer role Uc from the video of the customer Ua or the customer role Uc by using a facial action coding system (FACS), which is a mechanism for encoding the expression appearing on the human face into a machine distinguishable form by a combination of the presence and absence of various facial muscle movements called an action unit (AU). The control unit 230 may calculate the satisfaction level of the customer Ua from the video of the customer Ua using a known machine learning model (for example, OpenFace) for recognizing FACS from the video of the customer Ua.

The control unit 230 may give a label to a frame at a time when the calculated satisfaction level of the customer Ua or the customer role Uc is lower than the reference value.

The control unit 230 stores and accumulates the data of the video of the customer Ua or the customer role Uc to which the label is assigned in the storage unit 220.

The control unit 230 may learn the dissatisfaction estimation model using the data of the video of the customer Ua or the customer role Uc to which the label is assigned accumulated in the storage unit 220 as the learning data.

By performing the processing as described above, the control unit 230 can estimate the satisfaction level of the customer Ua on the basis of the video of the customer Ua.

When a remote interview is performed between the customer Ua and the salesperson Ub by using the dissatisfaction estimation model constructed as described above, the control unit 230 may acquire video data of the customer Ua from the talker terminal 10 and estimate the satisfaction level of the customer Ua on the basis of the video data of the customer Ua.

On the basis of the estimation result, the control unit 230 may generate the video reproduction screen in which the frame at the time when the satisfaction level of the customer Ua is lower than the reference value is highlighted.

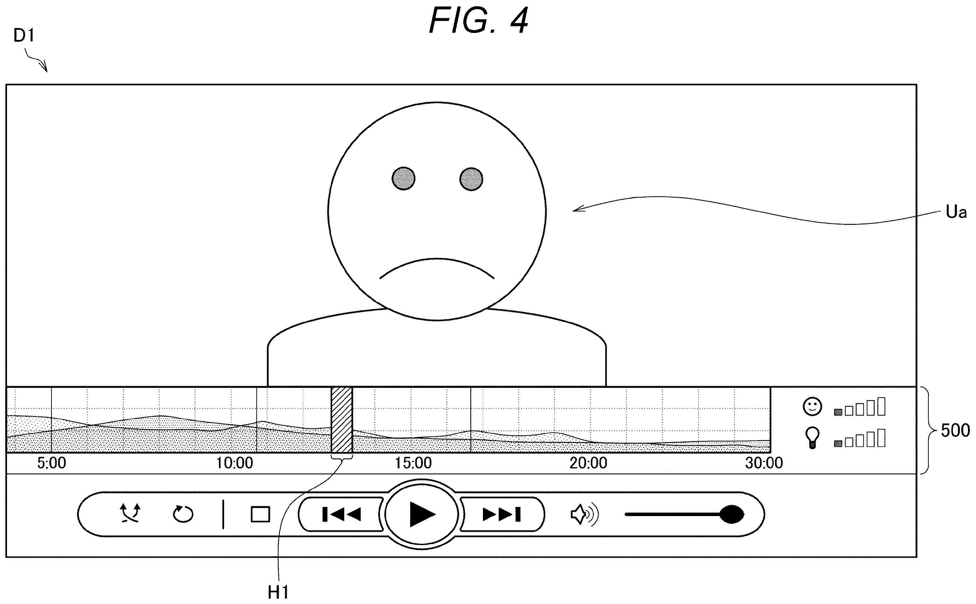

Fig. 4 is a diagram illustrating a video reproduction screen example generated by the control unit 230. The control unit 230 may generate a video reproduction screen including a video of the customer Ua and a user interface 500 indicating a current reproduction portion of the video, such as screen D1 illustrated in Fig. 4.

Furthermore, the control unit 230 may highlight, on the screen D1, a reproduction portion corresponding to the time at which the satisfaction level of the customer Ua is estimated to be lower than the reference value in the video of the customer Ua, like a highlight H1.

The control unit 230 may transmit the generated video reproduction screen and the cutout video of the salesperson Ub to the talker terminal 10B used by the salesperson Ub. As a result, the salesperson Ub can efficiently look back on the video at the time when the satisfaction level of the customer Ua is estimated to be low after the end of the remote interview.

### (Dissatisfaction Cause State Detection Processing)

In addition, in a case where the satisfaction level of the customer Ua estimated on the basis of the sensing data regarding the talker U is lower than the reference value, the control unit 230 according to the present embodiment may analyze the state of the salesperson Ub on the basis of the sensing data regarding the salesperson Ub. The control unit 230 may output the state of the salesperson Ub obtained as a result of the analysis as the dissatisfaction cause state.

More specifically, for example, when the remote interview is performed between the customer Ua and the salesperson Ub, the control unit 230 may acquire the video data of the customer Ua from the talker terminal 10 and estimate the satisfaction level of the customer Ua on the basis of the video data of the customer Ua.

Furthermore, the control unit 230 may analyze the video and voice of the salesperson Ub at the time when the satisfaction level of the customer Ua is estimated to be lower than the reference value from the video data at the time of the remote interview of the salesperson Ub.

Alternatively, the control unit 230 may analyze the video and voice of the salesperson Ub in a time zone having a width from the time when the satisfaction level of the customer Ua is estimated to be lower than the reference value.

More specifically, the control unit 230 may analyze the state of the salesperson Ub in a predetermined time section from the time when the satisfaction level of the customer Ua is lower than the reference value.

The control unit 230 may output the state of the salesperson Ub obtained as a result of the analysis as the dissatisfaction cause state. The state of the salesperson Ub may include, for example, an expression of the salesperson Ub, a body motion such as a gesture of the salesperson Ub, a speech content of the salesperson Ub, a tone of a voice of the salesperson Ub, and the like.

The control unit 230 may perform control to cause the storage unit 220 to store the video and voice at the time of the remote interview of the salesperson Ub and the data indicating the dissatisfaction cause state of the salesperson Ub output as a result of the analysis as the sales expression voice database.

The control unit 230 may learn the relationship between the video and the voice of the salesperson Ub accumulated in the sales expression voice database and the state of the salesperson Ub output as the dissatisfaction cause state by machine learning. The control unit 230 may detect whether or not the state of the salesperson Ub is the dissatisfaction cause state by using the model (hereinafter, dissatisfaction cause state detection model) obtained as a result of the learning.

By performing the processing as described above, the control unit 230 can estimate the state of the salesperson Ub related to the degree of the satisfaction level of the customer Ua as the dissatisfaction cause state in a case where the satisfaction level of the customer Ua is lower than the reference value on the basis of the video and voice of the salesperson Ub.

### (Notification Control Processing)

Furthermore, the control unit 230 according to the present embodiment may perform control to notify the salesperson Ub in a case of detecting that the state of the salesperson Ub is the dissatisfaction cause state on the basis of the sensing data regarding the salesperson Ub while a call is being made.

For example, the control unit 230 may perform control to output a display indicating that the state of the salesperson Ub is the dissatisfaction cause state on the call screen displayed on the talker terminal 10B used by the salesperson Ub while the call is being made.

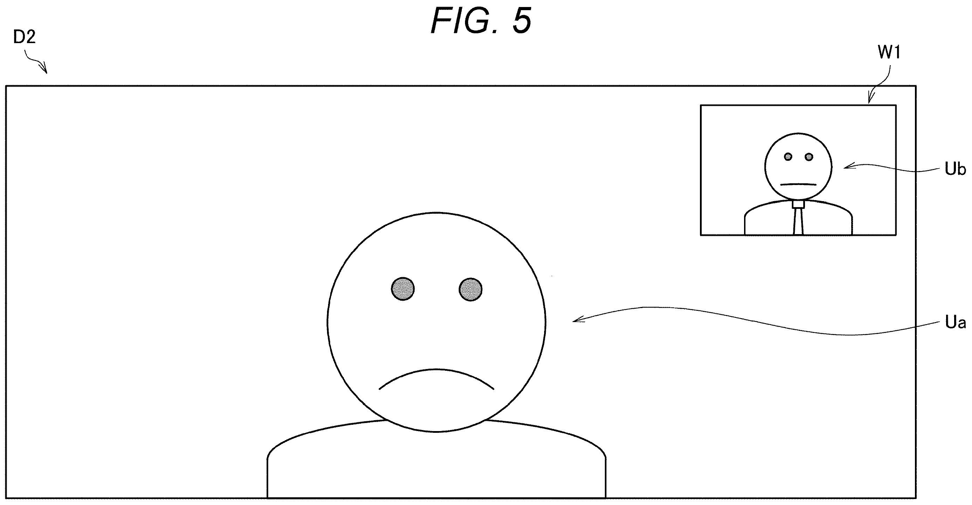

Fig. 5 is a diagram illustrating an example of a call screen generated by the control unit 230. The screen D2 illustrated in Fig. 5 includes a video of the customer Ua. In addition, the screen D2 includes a window W1 that displays a video of the salesperson Ub.

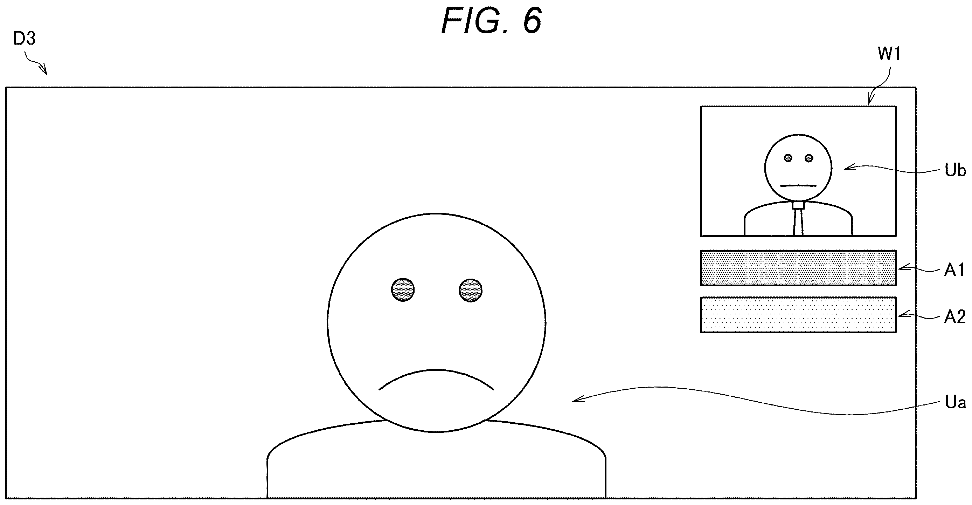

In addition, Fig. 6 is a diagram illustrating an example of a call screen and a notification display generated by the control unit 230. The screen D3 illustrated in Fig. 6 further includes display of the notification display A1 and the notification display A2 as compared with the screen D2 illustrated in Fig. 5.

The notification display A1 is an example of a notification display indicating that the state of the salesperson Ub is the dissatisfaction cause state. The notification display A1 may be a display of a color indicating a preset dissatisfaction cause state, such as yellow, for example.

In a case of detecting that the state of the salesperson Ub is the dissatisfaction cause state while the call is being made, the control unit 230 may control the notification to the salesperson Ub by controlling the display such as the notification display A1, for example.

In addition, the notification display A2 is an example of the notification display indicating that the satisfaction level of the customer Ua is lower than the reference value on the basis of the video of the customer Ua. The notification display A2 may be a display of a preset color indicating that the satisfaction level of the customer Ua is lower than the reference value, for example, red.

In a case where it is estimated that the satisfaction level of the customer Ua is lower than the reference value while the call is being made, the control unit 230 may perform control to notify the salesperson Ub that the satisfaction level of the customer Ua is lower than the reference value by controlling the display such as the notification display A1 illustrated in Fig. 6.

Note that the notification display A1 and the notification display A2 illustrated in Fig. 6 are examples of the display of the notification generated by the control unit 230, and the display of the notification generated by the control unit 230 is not limited to such examples. For example, the notification display A1 may be an image such as a mark, an illustration, a photograph, or an avatar indicating that the satisfaction level of the customer Ua is lower than the reference value. The image may be a still image or a moving image. Furthermore, the image may be an image generated using augmented reality (AR) technology and superimposed and displayed on the call screen. In addition, the notification display A1 may be a message indicating that the satisfaction level of the customer Ua is lower than the reference value.

Similarly, the notification display A2 may be an image such as a mark, an illustration, a photograph, or an avatar indicating that the state of the salesperson Ub is the dissatisfaction cause state. In addition, the notification display A1 may be a message indicating that the state of the salesperson Ub is the dissatisfaction cause state.

### (Detection Processing of Degree of Busyness of Customer)

Furthermore, the control unit 230 according to the present embodiment may determine the degree of busyness of the customer Ua according to the situation of the surrounding environment of the customer Ua estimated on the basis of the sensing data regarding the customer Ua while a call is being made. The control unit 230 performs control to notify the salesperson Ub of information regarding the busyness of the customer Ua according to the determination result.

For example, the control unit 230 may perform processing of determining whether or not the customer Ua is speaking by analyzing one or both of the video and the voice of the customer Ua while the call is being made.

More specifically, the control unit 230 may determine whether or not the customer Ua is speaking by analyzing the video of the customer Ua to detect whether or not the mouth of the customer Ua is moving. Furthermore, the control unit 230 may determine whether or not the customer Ua is speaking on the basis of the volume or the like indicated by the voice data of the customer Ua. Furthermore, in a case where the sensor unit 120 of the talker terminal 10A is realized by a microphone array including a plurality of microphones, the control unit 230 may determine whether or not the customer Ua is speaking by performing processing of estimating the direction of the sound source on the basis of the voice of the customer Ua acquired by each microphone.

Furthermore, in a case where it is determined that the customer Ua is not speaking, the control unit 230 may calculate the noise level around other than the customer Ua by analyzing the level (for example, sound intensity) of the voice data of the customer Ua received from the talker terminal 10A used by the customer Ua.

The control unit 230 may estimate the degree of busyness of the customer Ua on the basis of the calculated noise level. In a case where the calculated noise level exceeds the reference value, the control unit 230 may determine that the degree of busyness of the customer Ua is high and notify the salesperson Ub of information indicating that the customer Ua is busy.

Alternatively, the control unit 230 may determine whether or not a person has passed around the customer Ua by analyzing the video of the customer Ua.

For example, the control unit 230 may estimate the face and body regions of the customer Ua on the basis of the video of the customer Ua. Furthermore, the control unit 230 may detect a region other than the face and body of the customer Ua in the video of the customer Ua as a background. The control unit 230 may analyze changes in brightness and color of the background region, and determine that a person passes in a case where the change amount is larger than the reference value.

The control unit 230 may determine that the degree of busyness of the customer Ua is high and notify the salesperson Ub in a case where the number of times it is determined that a person passes through the background of the customer Ua during a certain period of time exceeds the reference value.

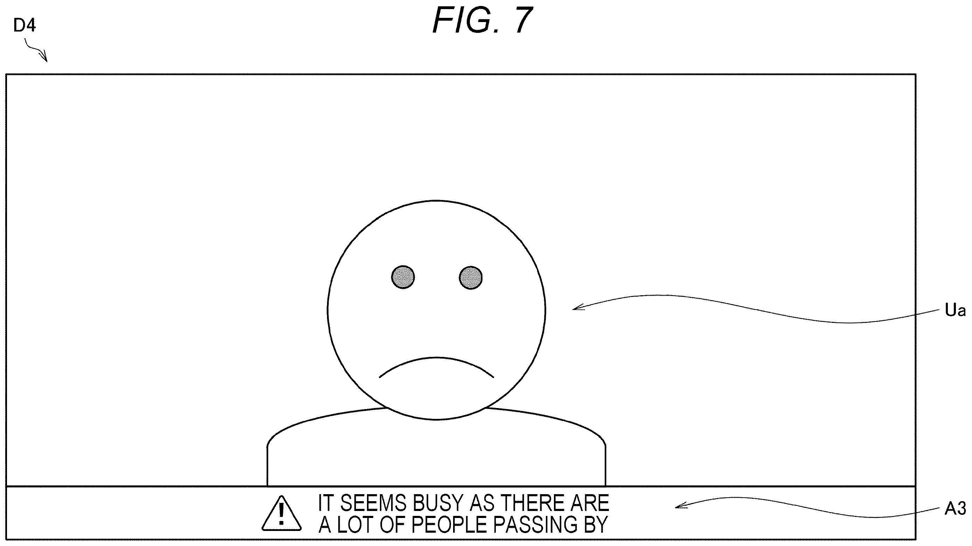

Fig. 7 is a diagram illustrating another example of the call screen and the notification display of the degree of busyness generated by the control unit 230. The screen D4 illustrated in Fig. 7 includes a video of the customer Ua and the notification display A3. The notification display A3 is an example of a notification display indicating that the degree of busyness of the customer Ua is high.

The control unit 230 may control notification to the salesperson Ub by performing control to display words indicating that the degree of busyness of the customer Ua is determined to be high on the call screen, for example, as in the notification display A3.

Furthermore, the control unit 230 may perform control to notify the customer Ua of a notification display such as the notification display A3.

By performing the processing as described above, the salesperson Ub can easily grasp that the customer Ua is in a busy situation. Furthermore, in a case where the customer Ua is determined to be busy, the salesperson Ub can take a response such as quickly ending the interview or asking the customer Ua about the current busyness.

Note that the control unit 230 may receive an instruction not to notify the customer Ua and the salesperson Ub of the determination result of the degree of busyness even in a case where it is determined that the degree of busyness of the customer Ua is high on the basis of the setting operation of the customer Ua.

### (Calculation Processing of Speaking Time)

Furthermore, the control unit 230 according to the present embodiment may calculate the presence or absence of utterance of each of the customer Ua and the salesperson Ub and the speaking time indicating the length of time of each utterance on the basis of the sensing data of the customer Ua and the salesperson Ub.

The control unit 230 may perform control to notify the salesperson Ub of information regarding the length of time during which each of the talkers of the customer Ua and the salesperson Ub is speaking, on the basis of the speaking time obtained as a result of the calculation.

The information regarding the length of time may be information indicating a ratio of the time uttered by each of the customer Ua and the salesperson Ub while the call is being made.

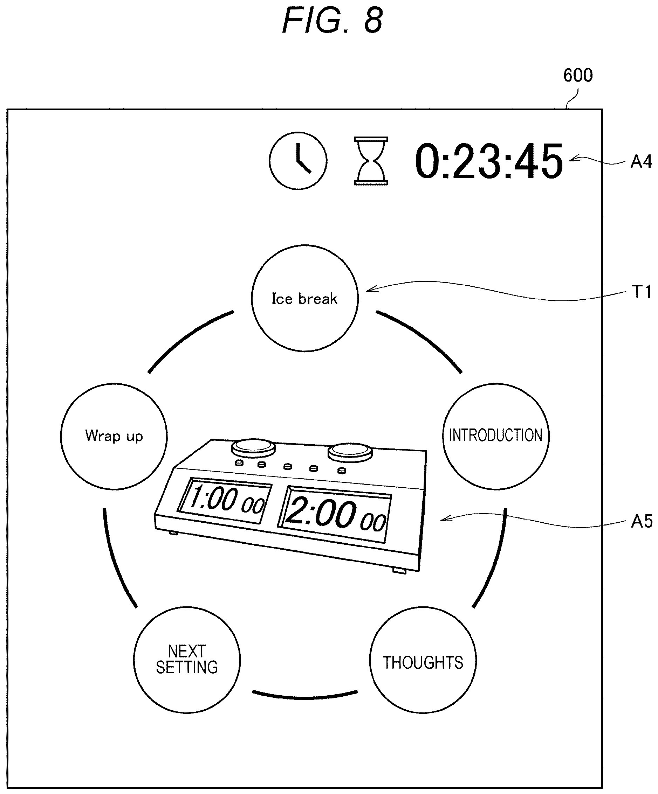

Fig. 8 is a diagram illustrating an example of a notification display indicating information regarding a speaking time generated by the control unit 230. The speaking time display 600 illustrated in Fig. 8 includes the notification display A4, the notification display A5, and the setting button T1.

The notification display A4 is an example of a display indicating the elapsed time from the start of the call between the customer Ua and the salesperson Ub. In addition, the notification display A5 is an example of a display indicating the cumulative total of the speaking time of the customer Ua and the cumulative total of the speaking time of the salesperson Ub.

In addition, the setting button T1 is a button indicating each of a plurality of topics included in the scheduled scenario of the salesperson Ub in the remote interview preset by the salesperson Ub. The salesperson Ub can notify the information processing apparatus 20 that the topic has been switched by performing a selection operation of the setting button T1 on the talker terminal 10B. In a case where the selection operation of the setting button T1 is performed, the control unit 230 may reset the counting of the cumulative total of the speaking times of the customer Ua and the cumulative total of the speaking times of the salesperson Ub in the notification display A4, and perform control to start the calculation of the type time from 0 again.

The control unit 230 may perform control to generate a call screen including a display such as the speaking time display 600 illustrated in Fig. 8 and display the call screen on the talker terminal 10B used by the talker U2, thereby performing control to notify the talker U2 of information regarding the length of the speaking time.

In addition, the control unit 230 may receive in advance the setting of the customer Ua who is the partner of the remote interview of the salesperson Ub, the purpose of the remote interview, and the scheduled time for the remote interview. Furthermore, the control unit 230 may generate the scheduled scenario of the remote interview on the basis of the information of the customer Ua whose setting has been accepted, the purpose of the remote interview, and the information of the scheduled time. The scheduled scenario may include a topic example of the remote interview and an allocation example of the scheduled time for each topic.

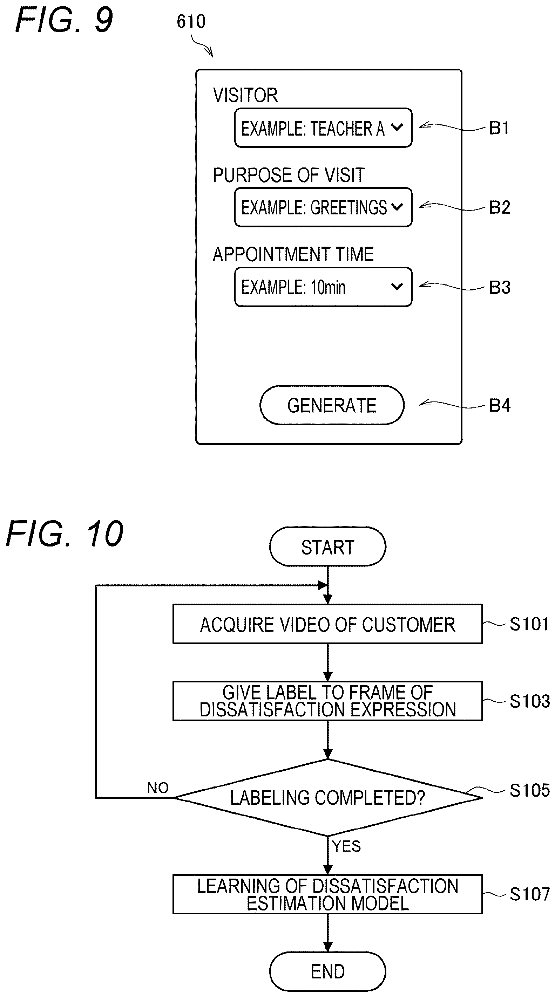

Fig. 9 is a diagram illustrating a setting reception screen example of the partner, the purpose, and the scheduled time of the remote interview generated by the control unit 230. As illustrated in Fig. 9, the control unit 230 may receive the selection operation of the selection buttons B1 to B3 by the salesperson Ub on a setting reception screen such as a screen D5. Furthermore, the control unit 230 may generate the scheduled scenario in a case where the pressing operation for the selection button B4 is performed.

Furthermore, after the remote interview is started, the control unit 230 may perform control to calculate the remaining time of the scheduled time allocated for each topic on the basis of the scheduled scenario generated in advance, the calculation result of the speaking time of the customer Ua, and the calculation result of the speaking time of the salesperson Ub, and notify the salesperson Ub using the notification display A4, the notification display A5, and the like.

By performing the processing as described above, the salesperson Ub can more easily grasp a situation such as one of the salesperson Ub itself or the customer Ua talking too much, and take a response such as changing the way of proceeding the interview.

An example of the functional configuration of the information processing apparatus 20 according to the present embodiment has been described above with reference to Figs. 3 to 9. Note that the above description described with reference to Figs. 3 to 9 is merely an example, and the configuration of the information processing apparatus 20 according to the present embodiment is not limited to such an example.

The configuration of the information processing apparatus 20 according to the present embodiment can be flexibly modified according to specifications and operations.

### <1-4. Operation Example>

Next, an operation example of the information processing system according to the present embodiment will be described with reference to Figs. 10 to 12.

Fig. 10 is a flowchart for explaining an operation example in the learning stage of the dissatisfaction estimation model of the information processing system according to the present embodiment. The information processing apparatus 20 learns the dissatisfaction estimation model by performing operation processing along the flow illustrated in the flowchart of Fig. 10.

The communication unit 210 acquires the video of the customer Ua from the talker terminal 10A (S101).

The control unit 230 gives a label to a frame of an expression indicating dissatisfaction among the frames included in the acquired video of the customer Ua (S103).

The control unit 230 repeats the processing of S101 and S103 until label assignment is completed for all the frames of expression indicating dissatisfaction among the plurality of frames included in the acquired video of the customer Ua (S105/NO).

When the label assignment to the frame included in the acquired video of the customer Ua is completed (S105/YES), the control unit 230 learns the dissatisfaction estimation model on the basis of the data of the video of the customer Ua (S107).

Hereinabove, the operation processing example in the learning stage of the dissatisfaction estimation model of the information processing system according to the present embodiment has been described with reference to Fig. 10.

Next, an operation processing example in the learning stage of the dissatisfaction cause state detection model of the information processing system according to the present embodiment will be described.

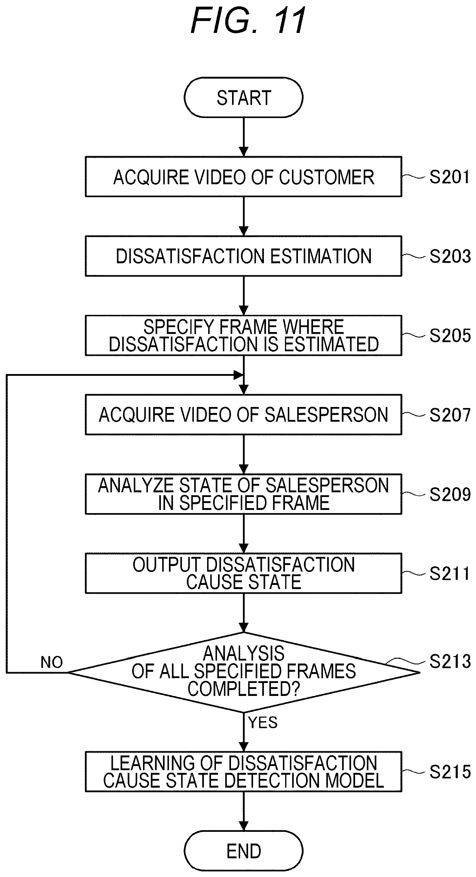

Fig. 11 is a second flowchart illustrating an operation example in the learning stage of the dissatisfaction cause state detection model of the information processing system according to the present embodiment. The information processing system according to the present embodiment may operate along the flow of processing illustrated in Fig. 11 after the dissatisfaction estimation model is constructed along the operation processing described with reference to Fig. 10.

First, the communication unit 210 of the information processing apparatus 20 acquires, from the talker terminal 10, a video of the customer Ua related to the remote interview performed between the customer Ua and the salesperson Ub (S201).

The control unit 230 estimates the satisfaction level of the customer Ua on the basis of the acquired video of the customer Ua using the dissatisfaction estimation model. In a case where the satisfaction level of the customer Ua is lower than the reference value, the control unit 230 estimates that the customer Ua indicates dissatisfaction (S203).

The control unit 230 specifies a frame estimated to indicate dissatisfaction by the customer Ua among a plurality of frames included in the acquired video of the customer Ua (S205).

Next, the control unit 230 acquires the video of the salesperson Ub in the remote interview corresponding to the video of the customer Ua acquired in S201 (S207).

The control unit 230 analyzes the state of the salesperson Ub in a frame corresponding to the time of the frame specified to indicate dissatisfaction by the customer Ua in S205 among the frames included in the acquired video of the salesperson Ub (S209).

The control unit 230 outputs the state of the salesperson Ub obtained as a result of the analysis as the dissatisfaction cause state and stores the state in the storage unit 220 (S211).

The control unit 230 repeats the processing of S207 to S211 until the analysis of the state of the salesperson Ub at the time corresponding to all the frames specified as indicating the dissatisfaction of the customer Ua in S205 is completed (S213/NO).

When the analysis of the state of the salesperson Ub at the time corresponding to all the specified frames is completed (S213/YES), the control unit 230 learns the dissatisfaction cause state detection model on the basis of the video of the salesperson Ub acquired in S207 and the dissatisfaction cause state of the salesperson Ub stored in the storage unit 220 (S215).

Hereinabove, the operation processing example in the learning stage of the dissatisfaction cause state detection model of the information processing system according to the present embodiment has been described with reference to Fig. 11.

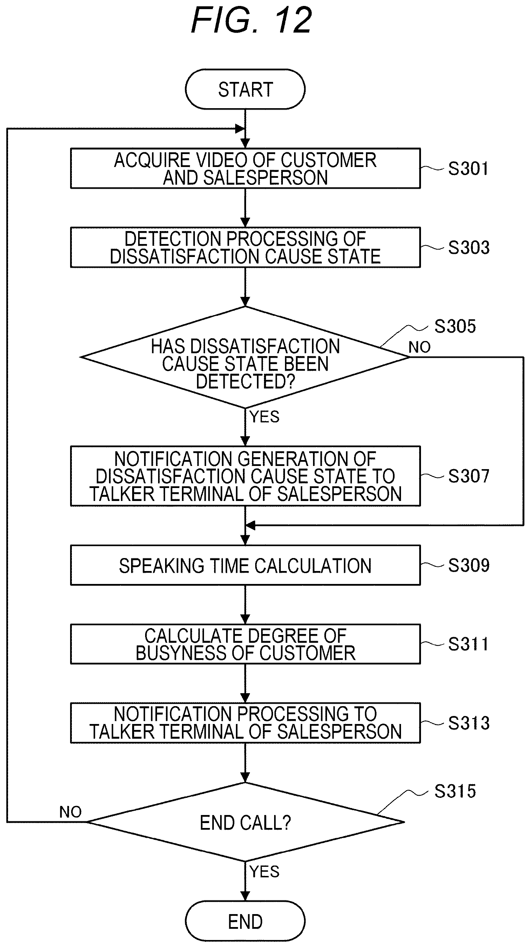

Fig. 12 is a flowchart illustrating an operation example in the inference stage of the dissatisfaction cause state of the information processing system according to the present embodiment. When a remote interview by a video call is started between the customer Ua and the salesperson Ub, the information processing system according to the present embodiment performs operation processing along the flow illustrated in Fig. 12 while the call is being continued.

Furthermore, the information processing apparatus 20 according to the present embodiment may operate along the flow of the processing described with reference to Fig. 11, and may operate along the flow of the processing illustrated in Fig. 12 after constructing the dissatisfaction cause state detection model.

First, the control unit 230 acquires a video of the customer Ua and a video of the salesperson Ub from each of the talker terminal 10A and the talker terminal 10B (S301).

The control unit 230 performs processing of detecting whether or not the salesperson Ub is in the dissatisfaction cause state on the basis of the video of the salesperson Ub using the dissatisfaction cause state detection model (S303).

In a case where it is not detected that the salesperson Ub is in the dissatisfaction cause state (S305/NO), the process proceeds to S309.

In a case where it is detected that the salesperson Ub is in the dissatisfaction cause state (S305/YES), the control unit 230 generates a notification indicating that the salesperson Ub is in the dissatisfaction cause state, which is displayed on the talker terminal 10B used by the salesperson Ub (S307).

Next, the control unit 230 calculates the speaking time of each of the customer Ua and the salesperson Ub on the basis of the video of the customer Ua and the video of the salesperson Ub (S309).

The control unit 230 calculates the degree of busyness of the customer Ua on the basis of the video of the customer Ua (S311).

The control unit 230 performs control to cause the communication unit 210 to transmit a notification indicating that the salesperson Ub is in the dissatisfaction cause state, a notification indicating the speaking times of the customer Ua and the salesperson Ub, and a notification indicating the degree of busyness of the customer Ua to the talker terminal 10B (S313).

The information processing apparatus 20 repeats the processing of S301 to S313 until an operation to end the call is detected in the talker terminal 10A or the talker terminal 10b (S315/NO).

In a case where the operation to end the call is detected in the talker terminal 10A or the talker terminal 10B (S315/YES), the control unit 230 ends the series of processing.

The operation example in the inference stage of the dissatisfaction cause state of the information processing system according to the present embodiment has been described above with reference to Fig. 12.

Note that, in the above description, an operation example has been described in a case where the control unit 230 acquires the video of the customer Ua and the video of the salesperson Ub from the talker terminal 10 as the sensing data regarding the talker U. However, the information processing apparatus 20 according to the present embodiment may acquire the voice of the customer Ua and the voice of the salesperson Ub in addition to the video of the customer Ua and the video of the salesperson Ub.

Furthermore, in the above description, an operation example in a case where the control unit 230 performs control to notify the salesperson Ub in a case where the satisfaction level of the customer Ua is lower than the reference value has been described. In a case where the satisfaction level of the customer Ua is lower than the reference value, the control unit 230 may perform control to notify the customer Ua in addition to the salesperson Ub.

The information processing system according to the first embodiment of the present disclosure has been described above. Note that, in the above description, an example has been described in which the control unit 230 provides a plurality of functions of dissatisfaction estimation (estimation of the satisfaction level) of the talker, notification of the dissatisfaction cause state, notification of information regarding the length of the speaking time, and notification of the degree of busyness. However, the present disclosure is not limited to such an example. For example, the functions of dissatisfaction estimation of the talker (estimation of the satisfaction level), notification of the dissatisfaction cause state, notification of information regarding the length of the speaking time, and notification of the degree of busyness may be individually provided. Furthermore, among the above-described functions, two or more functions may be provided in combination. Furthermore, the processing of each function is not necessarily performed in the above-described order, and can be flexibly changed.

Next, an information processing system according to a second embodiment of the present disclosure will be described.

### <2. Second Embodiment>

### <2-1. Overview>

The information processing system according to the second embodiment of the present disclosure has a function of generating information indicating an analysis result such as a satisfaction level of the customer Ua regarding the remote interview after the remote interview is performed between the customer Ua and the salesperson Ub by video call or voice call. The salesperson Ub can easily perform look-back after the remote interview by the information indicating the analysis result.

Such an information processing system according to the second embodiment of the present disclosure can adopt a system configuration similar to that of the first embodiment. More specifically, the information processing system according to the present embodiment is realized by the information processing apparatus 21 configured to be able to communicate with the talker terminal 10A and the talker terminal 10B via the network 5.

The information processing apparatus 21 that implements the information processing system according to the present embodiment further includes a new functional configuration in addition to the functional configuration of the information processing apparatus 20 described in the first embodiment.

Hereinafter, a functional configuration example of the information processing apparatus 21 that realizes the information processing system according to the second embodiment will be described in detail.

### <2-2. Functional Configuration Example>

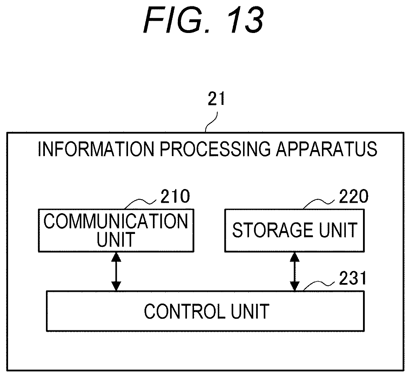

Fig. 13 is a block diagram illustrating a functional configuration example of the information processing apparatus 21 according to the second embodiment. As illustrated in Fig. 13, the information processing apparatus 21 includes a communication unit 210, a storage unit 220, and a control unit 231.

Since the communication unit 210 and the storage unit 220 are as described with reference to Fig. 3 in the first embodiment, redundant description will be omitted.

### (Control Unit 231)

The control unit 231 has a configuration corresponding to the control unit 230 described with reference to Fig. 3. The control unit 231 controls the overall operation of the information processing apparatus 21. For example, the control unit 231 controls communication between the communication unit 210 and another apparatus.

In addition, similarly to the control unit 230 of the information processing apparatus 20 in the first embodiment, the control unit 231 has a function of learning the dissatisfaction estimation model and the dissatisfaction cause state detection model on the basis of the sensing data regarding the talker U acquired from the talker terminal 10.

Furthermore, the control unit 231 has a function of estimating whether or not the customer Ua indicates dissatisfaction on the basis of the sensing data regarding the customer Ua using the dissatisfaction estimation model.

In addition, the control unit 231 has a function of detecting whether or not the state of the salesperson Ub is in the dissatisfaction cause state on the basis of the sensing data regarding the salesperson Ub using the dissatisfaction cause state detection model.

Furthermore, the control unit 231 according to the present embodiment has a function of detecting the tension level of the salesperson Ub and the tension cause state of the salesperson Ub on the basis of the sensing data regarding the salesperson Ub.

### (Tension Level Estimation Processing)

More specifically, the control unit 231 according to the present embodiment can acquire the tension level of the salesperson Ub by the following several methods on the basis of the sensing data regarding the salesperson Ub.

For example, the control unit 231 may construct a machine learning model (hereinafter, a tension level estimation model) that estimates the tension level of the salesperson Ub on the basis of the sensing data regarding the salesperson Ub.

For example, the control unit 231 may construct the tension level estimation model by performing learning using a video of the salesperson Ub and a label given to a frame in which the salesperson Ub is nervous among frames included in the video of the salesperson Ub as learning data.

Alternatively, the control unit 231 may perform processing of analyzing the expression of the salesperson Ub from the video of the salesperson Ub. The control unit 231 may learn a machine learning model for estimating the tension level of the salesperson Ub on the basis of the type of the expression of the salesperson Ub obtained as a result of the analysis. The control unit 231 may estimate the tension level of the salesperson Ub using the machine learning model obtained as a result of learning as a tension level estimation model.

Alternatively, the control unit 231 may estimate the heart rate of the salesperson Ub on the basis of a biological signal emitted by a biological phenomenon of the salesperson Ub. The control unit 231 may estimate the tension level of the salesperson Ub by comparing the heart rate of the salesperson Ub obtained as a result of the estimation with the reference value.

For example, the control unit 231 may estimate the heart rate of the salesperson Ub by electrocardiography on the basis of a biological signal acquired by an electrocardiogram (ECG) sensor attached to the body of the salesperson Ub.

Alternatively, the control unit 231 may estimate the heart rate (pulse rate) of the salesperson Ub by photoplethysmography on the basis of a biological signal acquired by a PPG sensor attached to the body of the salesperson Ub.

Alternatively, the control unit 231 may estimate the heart rate of the salesperson Ub on the basis of a biological signal acquired by a laser Doppler flowmetry (LDF) sensor.

Alternatively, the control unit 231 may estimate the heart rate by regarding a change in skin color of the salesperson Ub in the moving image as a PPG signal.

Alternatively, the control unit 231 may estimate the tension level of the salesperson Ub on the basis of the value of the blood pressure of the salesperson Ub acquired by the continuous blood pressure monitor worn by the salesperson Ub.

In addition, the control unit 231 may estimate the tension level of the salesperson Ub on the basis of another biological signal of the salesperson Ub such as electroencephalogram (EEG) or surface myoelectric potential (EMG; Electromyography).

The control unit 231 may specify a time at which the tension level of the salesperson Ub is higher than the reference value during the call of the remote interview, and may generate a video reproduction screen in which the portion is highlighted.

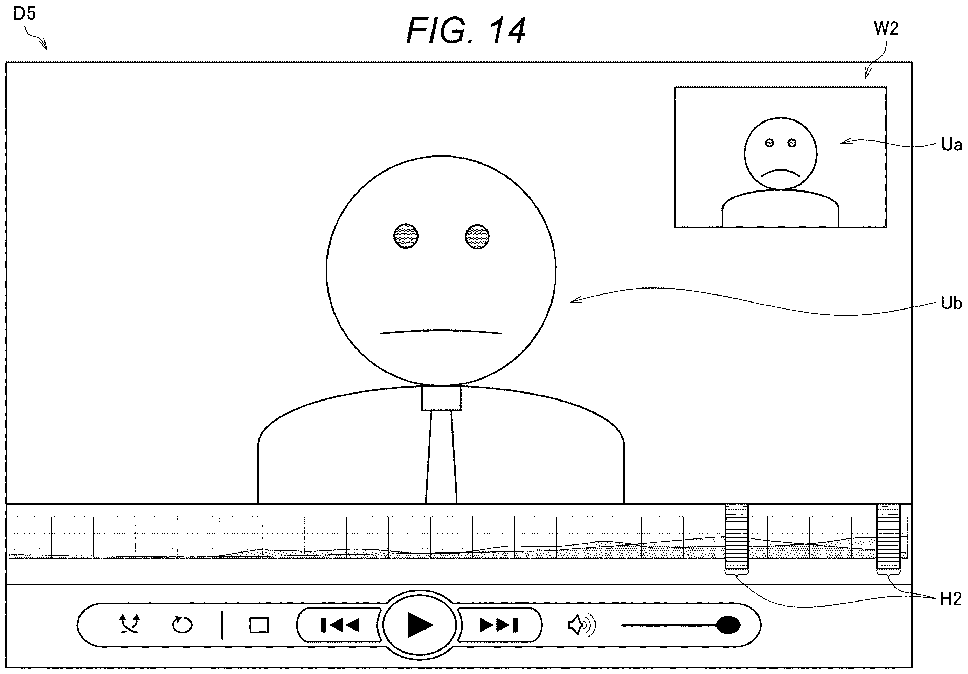

Fig. 14 is a diagram illustrating an example of a video reproduction screen generated by the control unit 231. The screen D5 illustrated in Fig. 14 includes a video of the salesperson Ub. In addition, the screen D5 includes a window W2 for displaying the video of the customer Ua.

As in the highlight H2 illustrated in Fig. 14, the control unit 231 may highlight the reproduction portion corresponding to the time at which the tension level of the salesperson Ub is estimated to be higher than the reference value in the video of the salesperson Ub.

The control unit 231 may transmit the generated video reproduction screen to the talker terminal 10B used by the salesperson Ub. As a result, the salesperson Ub can efficiently look back on the video of the portion where the tension level of the salesperson Ub itself was high after the end of the remote interview. Therefore, the salesperson Ub can improve the interview technique by looking back on the situation, topic, cause of tension, or the like that the salesperson Ub is not good at.

### (Tension Cause State Detection Processing)

In addition, the control unit 231 according to the present embodiment has a function of analyzing the state of the customer Ua in a case where the tension level of the salesperson Ub is higher than the reference value.

The control unit 231 may analyze the state of the customer Ua in a predetermined time section from the time when the tension level of the salesperson Ub is higher than the reference value among the frames included in the video of the salesperson Ub of the remote interview.

The control unit 231 outputs the state of the customer Ua obtained as a result of the analysis as the tension cause state.

### (Topic and Speaking Time Calculation Processing for Each Topic)

Furthermore, the control unit 231 according to the present embodiment may analyze the video and voice of the customer Ua and the video and voice of the salesperson Ub to calculate the time when the customer Ua and the salesperson Ub are speaking about a preset keyword (topic).

On the basis of the calculated speaking time for each keyword, the control unit 231 may determine a keyword with a higher number of times of mentioning in descending order of the number of times of mentioning during the remote interview.

Furthermore, the control unit 231 may perform processing of converting the voice data of the determined high-order keyword into character information. The control unit 231 outputs the determined high-order keyword.

Furthermore, the control unit 231 may generate a video reproduction screen in which the time when the utterance for each keyword is detected during the call of the remote interview is highlighted.

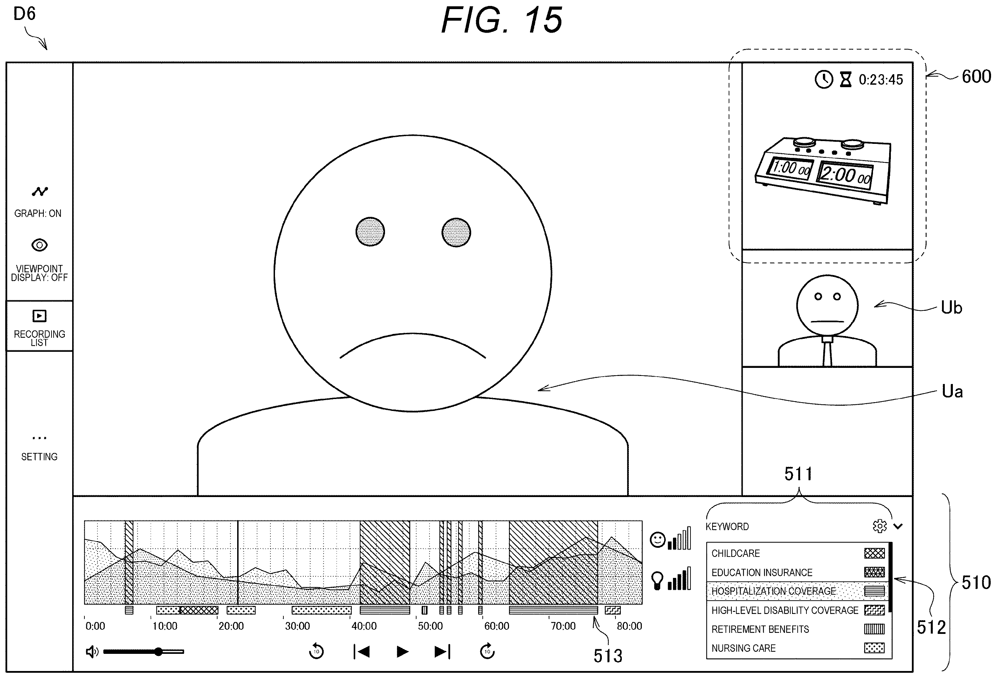

Fig. 15 is a diagram illustrating another example of the video reproduction screen generated by the control unit 231. The screen D6 illustrated in Fig. 15 includes videos of the customer Ua and the salesperson Ub. Furthermore, the screen D6 may include the display of the speaking time display 600 described with reference to Fig. 8 in the first embodiment.

In the example illustrated in Fig. 15, the screen D6 includes a user interface 510. As in the keyword list display 511 illustrated in Fig. 15, the control unit 231 may generate the video reproduction screen including the display indicating the keyword of the detection target.

Furthermore, the control unit 231 may generate the video reproduction screen including a display indicating a case example of a color indicating the speaking time of each keyword, such as the keyword color display 512 illustrated in Fig. 15.

Furthermore, the control unit 231 may generate the video reproduction screen including highlight display indicating the time at which the utterance for each keyword has been detected for each color of each keyword indicated by the keyword color display 512, such as the per-keyword speaking time 513 illustrated in Fig. 15.

The control unit 231 may transmit the generated video reproduction screen to the talker terminal 10B used by the salesperson Ub. As a result, the salesperson Ub can easily look back on which topic was frequently mentioned after the end of the remote interview. Therefore, for example, the salesperson Ub can analyze a topic in which the customer Ua is interested and utilize the analysis result at the time of a future interview with the customer Ua.

### (Generation of Call Summary Screen)

In addition, the control unit 231 according to the present embodiment has a function of generating a call summary screen including information indicating the satisfaction level of the customer Ua and the dissatisfaction cause state of the talker of the salesperson Ub from the start to the end of the call of the remote interview.

The call summary screen may include information of the analysis result of the sensing data regarding the other customer Ua and the salesperson Ub such as the tension level of the salesperson Ub or the topic on which the number of times of mentioning is large described above.

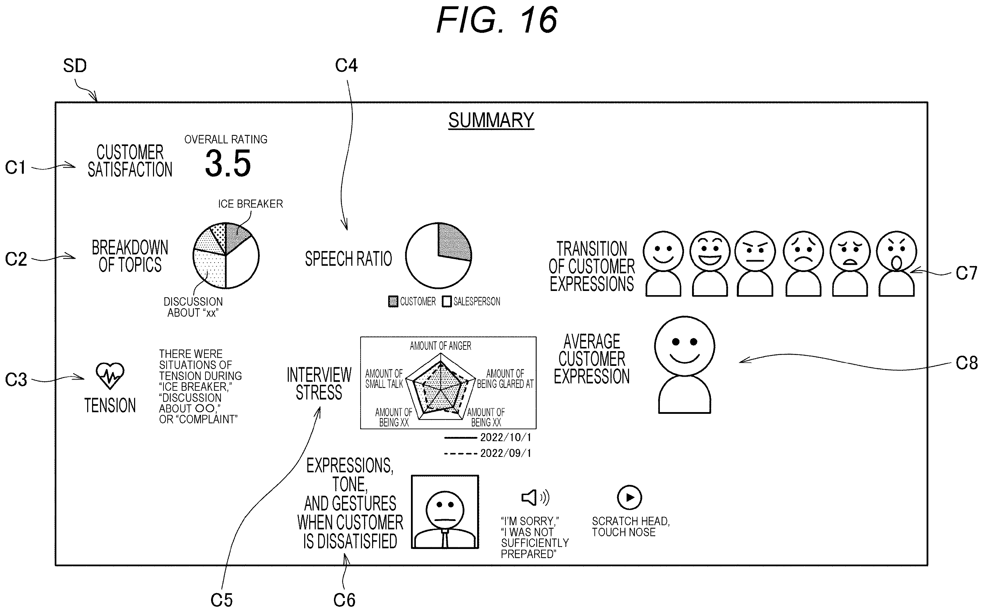

Fig. 16 is a diagram illustrating an example of a call summary screen generated by the control unit 231. In the example illustrated in Fig. 16, the call summary screen SD includes eight analysis result items C of the analysis result items C1 to C8.

The control unit 231 may generate a call summary screen including an analysis result indicating a comprehensive evaluation of the degree of the satisfaction level of the customer Ua from the start to the end of the remote interview call, such as the analysis result item C1 illustrated in Fig. 16. The control unit 231 may calculate the comprehensive evaluation on the basis of the transition of the value of the satisfaction level of the customer Ua estimated using the dissatisfaction estimation model.

Furthermore, the control unit 231 may generate a call summary screen including information indicating a ratio between a topic having been mentioned a large number of times during a call and a speaking time for each topic, such as the analysis result item C2.

Furthermore, the control unit 231 may generate a call summary screen including information on the tension cause state at the time when the tension level of the salesperson Ub is detected to be higher than the reference value during a call, such as the analysis result item C3.

Furthermore, the control unit 231 may generate a summary screen including information on an analysis result of the tension cause state at the time when the tension level of the salesperson Ub is detected to be higher than the reference value during a call, such as the analysis result item C4.

Further, the control unit 231 may generate a graph indicating the time when a situation in which a mental burden (stress) is likely to be applied to the salesperson Ub is detected as in the analysis result item C5. The control unit 231 may generate a call summary screen including the graph. For example, the control unit 231 may analyze the video of the customer Ua to calculate the time during which the customer Ua showed an angry expression or the time during which the customer Ua made an expression as if glaring at the salesperson Ub, and generate a graph such as the analysis result item C5.

Further, the control unit 231 may generate the call summary screen including information indicating the analysis result of the state of the salesperson Ub at the time when the satisfaction level of the customer Ua is lower than the reference value, such as the analysis result item C6. The analysis result of the state of the salesperson Ub may be a cutout image of a video of the salesperson Ub indicating the state of the salesperson Ub. Alternatively, the analysis result of the state of the salesperson Ub may be character information indicating the speech content of the salesperson Ub. In addition, the analysis result of the state of the salesperson Ub may be information indicating a gesture or a body motion of the salesperson Ub.

In addition, the control unit 231 may generate the call summary screen including the information indicating the transition of the expression of the customer Ua indicating the analysis result of the expression of the customer Ua at regular intervals, such as the analysis result item C7.

In addition, the control unit 231 may generate the call summary screen including the information of the expression indicating the average value of the satisfaction levels from the start to the end of the call of the customer Ua, such as the analysis result item C8.

The control unit 231 may perform control to transmit the generated call summary screen to the talker terminal 10B used by the salesperson Ub.

By performing the processing as described above, the salesperson Ub can more easily analyze the satisfaction level of the customer Ua, the words and actions of the salesperson Ub related to the satisfaction level of the customer Ua, and the like after the end of the remote interview.

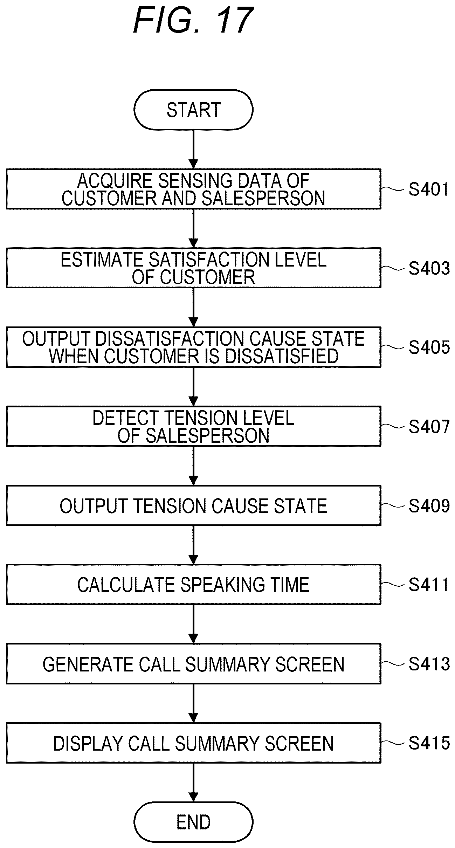

The functional configuration example of the information processing apparatus 21 according to the second embodiment of the present disclosure has been described above with reference to Figs. 13 to 16. Next, an operation example of the information processing system according to the second embodiment of the present disclosure will be described with reference to Fig. 17.

### <2-3. Operation Example>

Fig. 17 is a flowchart illustrating an operation example of the information processing system according to the second embodiment of the present disclosure.

First, the control unit 231 acquires sensing data of the customer Ua and the salesperson Ub (S401).

The control unit 231 estimates the satisfaction level of the customer Ua on the basis of the acquired video of the customer Ua (S403).

The control unit 231 analyzes the state of the salesperson Ub at the time when the satisfaction level of the customer Ua is lower than the reference value, and outputs the dissatisfaction cause state (S405).

The control unit 231 detects the tension level of the salesperson Ub on the basis of a video of the salesperson Ub or sensing data such as a biological signal (S407).

The control unit 231 analyzes the state of the customer Ua at the time when the tension level of the salesperson Ub is higher than the reference value, and outputs the tension cause state (S409).

The control unit 231 analyzes the video and voice of customer Ua and the video and voice of the salesperson Ub, and calculates the speaking time (S411).

The control unit 231 generates a call summary screen on the basis of the analysis result obtained as a result of the processing of S403 to S411 (S413).

The control unit 231 performs control to transmit the call summary screen from the communication unit 210 to the talker terminal 10 and display the call summary screen (S415).

The information processing system according to the second embodiment of the present disclosure has been described above. Note that, in the above, an example has been described in which the control unit 231 provides a plurality of functions of the tension level estimation processing of the talker, the detection processing of the tension cause state, the calculation of the speaking time, and the generation processing of the call summary screen. However, the present disclosure is not limited to such an example. For example, the respective functions of the tension level estimation processing of the talker, the detection processing of the tension cause state, the calculation of the speaking time, and the generation processing of the call summary screen may be individually provided. In addition, two or more of the above-described functions may be provided in combination. Furthermore, the processing of each function is not necessarily performed in the above-described order, and can be flexibly changed.

Next, an information processing system according to a third embodiment of the present disclosure will be described.

### <3. Third Embodiment>

### <3-1. Overview>

An information processing system according to a third embodiment of the present disclosure mainly provides a function that can be applied to a case where a remote interview is performed as practice between a salesperson Ub and a customer role Uc serving as a customer role.

More specifically, the information processing system according to the third embodiment of the present disclosure performs processing of changing the appearance and voice of the customer role Uc on the video like a different person by processing the video and voice of the customer role Uc. As a result, even in a case where a remote interview is performed in practice, the salesperson Ub can feel as if a customer role Uc is not an acquaintance. Therefore, reality at the time of practice of the remote interview of the salesperson Ub can be enhanced. In addition, the effect of practice of the remote interview is expected to be improved.

Such an information processing system according to the third embodiment of the present disclosure can adopt a system configuration similar to that of the first embodiment and the second embodiment. More specifically, the information processing system according to the present embodiment is realized by the talker terminal 10C used by the customer role Uc, the talker terminal 10B, and the information processing apparatus 22.

The information processing apparatus 22 that implements the information processing system according to the present embodiment further includes the following new functional configuration in addition to the functional configuration of the information processing apparatus 20 described in the first embodiment.

Hereinafter, a functional configuration example of the information processing apparatus 22 that realizes the information processing system according to the third embodiment will be described in detail.

### <3-2. Functional Configuration Example>

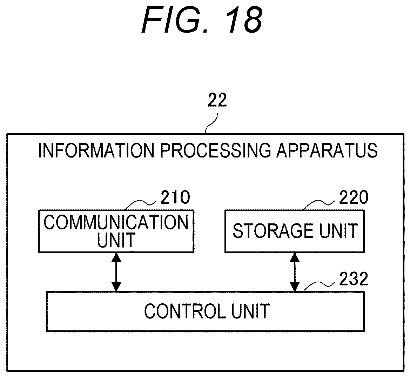

Fig. 18 is a block diagram illustrating a functional configuration example of the information processing apparatus 22 according to the third embodiment. As illustrated in Fig. 18, the information processing apparatus 22 includes a communication unit 210, a storage unit 220, and a control unit 232.

Since the communication unit 210 and the storage unit 220 are as described with reference to Fig. 3 in the first embodiment, redundant description will be omitted.

### (Control Unit 232)

The control unit 232 has a configuration corresponding to the control unit 230 described with reference to Fig. 3. The control unit 232 controls the overall operation of the information processing apparatus 22. For example, the control unit 232 controls communication between the communication unit 210 and another apparatus.

Similarly to the control unit 230 of the information processing apparatus 20 in the first embodiment, the control unit 232 has a function of learning the dissatisfaction estimation model and the dissatisfaction cause state detection model on the basis of the sensing data regarding the talker U acquired from the talker terminal 10.

In addition, the control unit 232 acquires the video of the customer role Uc from the talker terminal 10C, and estimates the time at which the satisfaction level of the customer role Uc is lower than the reference value using the dissatisfaction estimation model.

### (Face Video and Audio Conversion Processing)

Furthermore, the control unit 232 according to the present embodiment performs processing of analyzing the face video of the customer role Uc, and combining and processing the face video of the customer role Uc with another face image prepared in advance.

At this time, the control unit 232 performs calibration so that the movement of each part of the converted face video matches the actual movement of each part of the face of the customer role Uc on the basis of the face video of the customer role Uc that captures the movement of the face of the customer role Uc.

Alternatively, the control unit 232 may receive a setting operation of a value of a parameter for adjusting the degree of conversion of the face image and the voice by the customer role Uc.

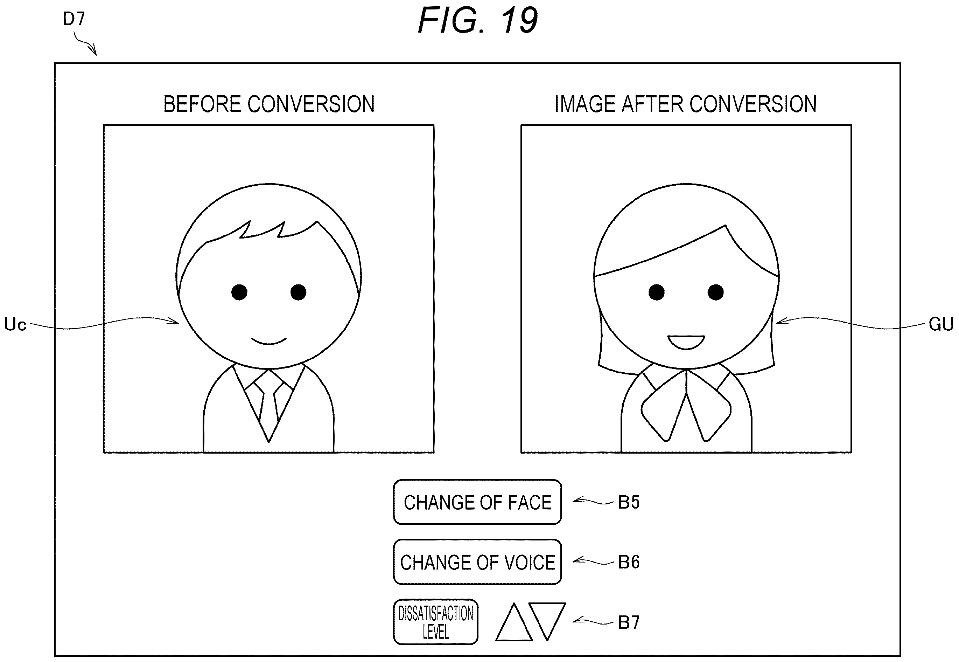

Fig. 19 is a diagram illustrating an example of a parameter setting reception screen related to conversion of a face image and sound by the control unit 232.

As in the screen D7 illustrated in Fig. 19, the control unit 232 may generate a parameter setting reception screen including display of the video before conversion of the customer role Uc and the converted talker video GU indicating the video after conversion.

In addition, the control unit 232 may change the value of the parameter for determining the degree of conversion of the face video and audio of the customer role Uc according to the pressing operation of the selection button B5 and the selection button B6 by the customer role Uc.

Furthermore, in a case where the pressing operation for the selection button B7 is performed by the customer role Uc, the control unit 232 may perform image processing of changing the expression of the converted talker video GU to an expression indicating dissatisfaction.

### (Notification Processing According to Scheduled Scenario)

Furthermore, the control unit 232 according to the present embodiment may receive setting of a scheduled scenario of a remote interview of practice performed between the salesperson Ub and the customer role Uc. The scheduled scenario may include a topic to be mentioned, a time allocation for each topic, a scheduled portion at which the customer role Uc is dissatisfied, and the like.

The control unit 232 may estimate the satisfaction level of the customer role Uc during a remote interview call between the salesperson Ub and the customer role Uc. The control unit 232 may perform control to notify the customer role Uc in a case where the satisfaction level of the customer role Uc at the time set as the portion indicating dissatisfaction in the scheduled scenario is higher than the reference value.

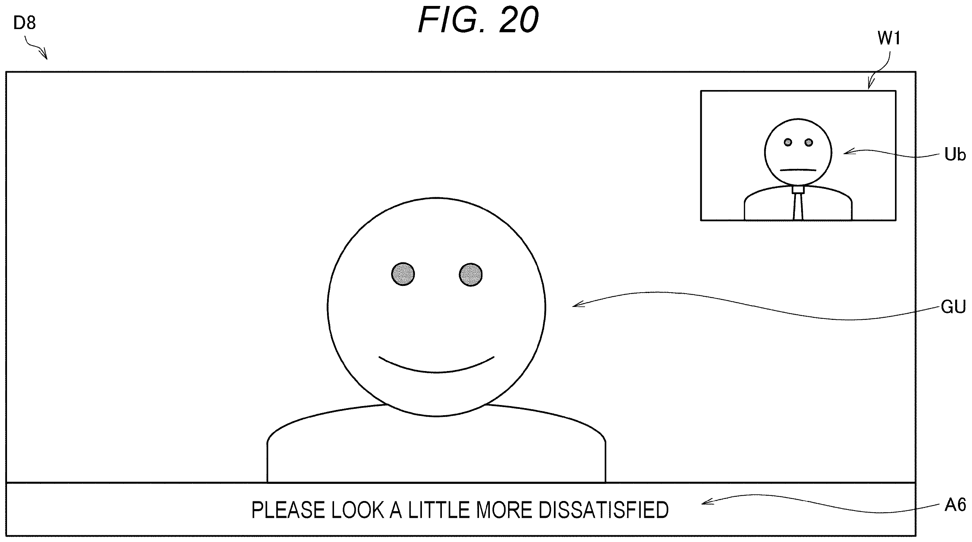

Fig. 20 is a diagram illustrating an example of a call screen and a notification display generated by the control unit 232. The screen D8 illustrated in Fig. 20 includes a video of the converted talker video GU of the customer role Uc. In addition, the screen D8 includes a window W1 that displays a video of the salesperson Ub.

For example, as in the notification display A6 illustrated in Fig. 20, the control unit 232 may generate a notification display indicating that the dissatisfaction level scheduled in the scheduled scenario for the customer role Uc does not match the dissatisfaction level of the expression of the current customer role Uc.

The functional configuration example of the information processing apparatus 22 according to the third embodiment of the present disclosure has been described above with reference to Figs. 18 to 20.

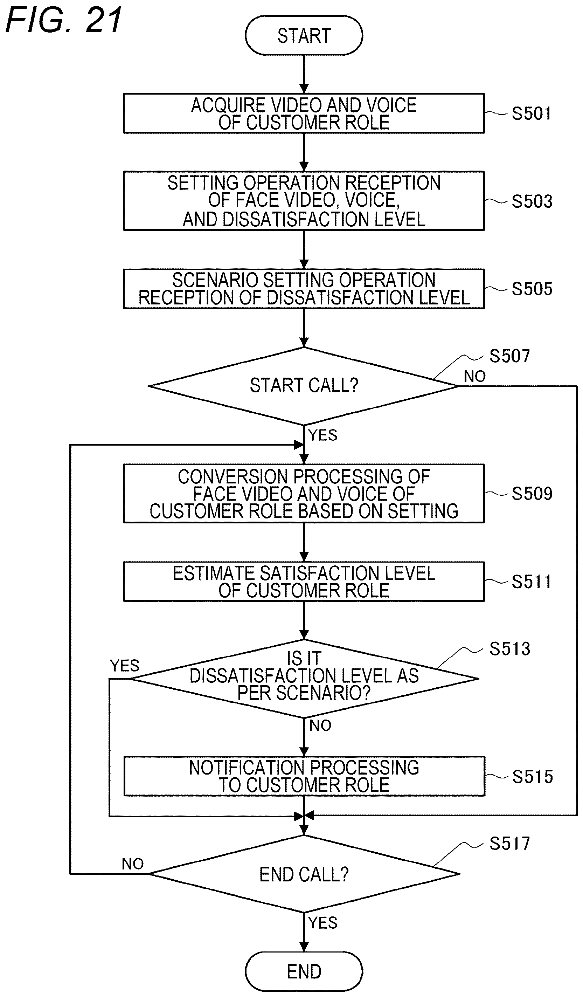

Next, an operation example of the information processing system according to the present embodiment will be described with reference to Fig. 21.

### <3-3. Operation Example>

Fig. 21 is a flowchart for explaining an operation example of the information processing system according to the third embodiment of the present disclosure.

First, the control unit 232 acquires the video and the voice of the customer role Uc (S501).

The control unit 232 receives a parameter setting operation of the face video, the voice, and the dissatisfaction level (S503).

The control unit 232 receives the setting operation of the scheduled scenario including the information of the scheduled portion in which the customer role Uc is dissatisfied (S505).

In a case where the operation to start a call is not performed on the talker terminal 10B or the talker terminal 10C (S507/NO), the process proceeds to S517.

In a case where the operation to start the call is performed in the talker terminal 10B or the talker terminal 10C (S507/YES), the control unit 232 performs conversion processing of the face video and the voice of the customer role Uc on the basis of the set value of the parameter received in S503 (S509).

The control unit 232 estimates the satisfaction level of the customer role Uc using the dissatisfaction estimation model (S511).

In a case where the dissatisfaction level of the estimated customer role Uc is the dissatisfaction level according to the scheduled scenario (S513/YES), the process proceeds to S517.

In a case where the estimated dissatisfaction level of the customer role Uc is not the dissatisfaction level according to the scheduled scenario (S513/NO), the control unit 232 performs control to notify the customer role Uc (S515).

In the talker terminal 10B or the talker terminal 10C, the control unit 230 repeats the processing of S509 to S515 until the operation to end the call is detected (S517/NO).

When the operation to end the call is detected in the talker terminal 10B or the talker terminal 10C (S517/UES), the information processing apparatus 22 ends the series of processing.

The information processing system according to the third embodiment of the present disclosure has been described above. Note that, in the above description, an example has been described in which the plurality of functions of the conversion processing of the face video of the talker, the conversion processing of the voice of the talker, and the notification processing according to the scheduled scenario are provided by the control unit 232. However, the present disclosure is not limited to such an example. For example, the functions of the conversion processing of the face video of the talker, the conversion processing of the voice of the talker, and the notification processing according to the scheduled scenario may be individually provided. In addition, two or more of the above-described functions may be provided in combination. Furthermore, the processing of each function is not necessarily performed in the above-described order, and can be flexibly changed.

Next, an information processing system according to a fourth embodiment of the present disclosure will be described.

### <4. Fourth Embodiment>

### <4-1. Overview>

An information processing system according to a fourth embodiment of the present disclosure provides an application function for a plurality of salespersons who makes calls with a customer Ua to perform remote interview by video call or voice call.

Such an information processing system according to the fourth embodiment of the present disclosure can adopt a system configuration similar to that of the first embodiment, the second embodiment, and the third embodiment. More specifically, the information processing system according to the present embodiment is realized by the talker terminal 10A, the talker terminal 10B used by each of a plurality of salespersons, and the information processing apparatus 23.

Hereinafter, a functional configuration example of the information processing apparatus 23 that realizes the information processing system according to the fourth embodiment will be described in detail.

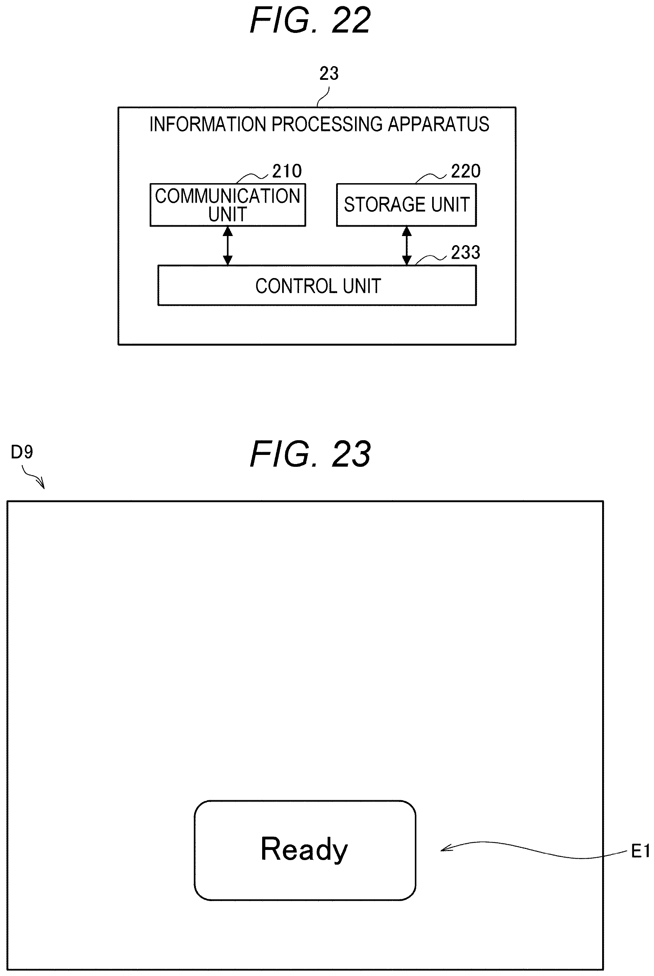

Fig. 22 is a block diagram illustrating a functional configuration example of the information processing apparatus 23 according to the fourth embodiment. As illustrated in Fig. 22, the information processing apparatus 23 includes a communication unit 210, a storage unit 220, and a control unit 233.

Since the communication unit 210 and the storage unit 220 are as described with reference to Fig. 3 in the first embodiment, redundant description will be omitted.

### (Control Unit 233)

The control unit 233 has a configuration corresponding to the control unit 230 described with reference to Fig. 3. The control unit 233 controls the overall operation of the information processing apparatus 23. For example, the control unit 233 controls communication between the communication unit 210 and another apparatus.

### (Online Waiting Room Function)

The control unit 233 according to the present embodiment provides, for each customer Ua, an online waiting room function that enables a salesperson who desires a remote interview with the customer Ua to wait in line.

More specifically, the control unit 233 has a function of generating various user interface screens related to the online waiting room function in response to a request received by the communication unit 210 from the talker terminal 10. The control unit 233 may cause the communication unit 210 to transmit data related to the generated user interface screen to the talker terminal 10.

### (Call Available State Notification Function of Doctor)

For example, the control unit 233 according to the present embodiment has a function of generating a doctor side standby screen that receives an operation indicating that the customer Ua can start a call.

Fig. 23 is a diagram illustrating an example of the doctor side standby screen generated by the control unit 233. As illustrated in Fig. 23, the screen D9 includes a selection button E1.

In a case of receiving a notification from the talker terminal 10 that the pressing operation of the selection button E1 is detected in the talker terminal 10A, the control unit 233 may perform control to notify the talker terminal 10 used by the salesperson on standby that the customer Ua can start a call.

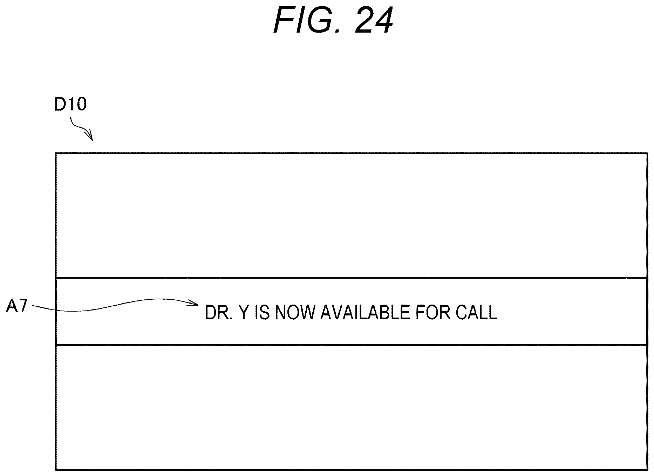

Fig. 24 is a diagram illustrating an example of a sales side standby screen generated by the control unit 233. As illustrated in Fig. 24, the screen D10 includes a notification display A7. For example, the control unit 233 may perform control to transmit a screen such as the screen D10 to the talker terminal 10 and display the screen, thereby performing control to notify the standby salesperson that the customer Ua can start a call.

Furthermore, the control unit 233 may perform control to start a call between the customer Ua and the salesperson in a case where a call start operation is performed by both the customer Ua and the salesperson of the notification destination after notification that the customer Ua can start a call is made.

As a result, the customer Ua can start an interview with the salesperson when the customer Ua has time to have an interview with the sales representative during the busy work. In addition, as compared with a case where the salesperson directly visits a hospital or the like where the customer Ua works, the customer Ua can respond to an interview with the salesperson without feeling rushed.

### (Information Display of Salesperson and Priority Order Setting Function)

In addition, the control unit 233 according to the present embodiment may generate a doctor side standby screen including information on the salesperson waiting for an interview with the customer Ua.

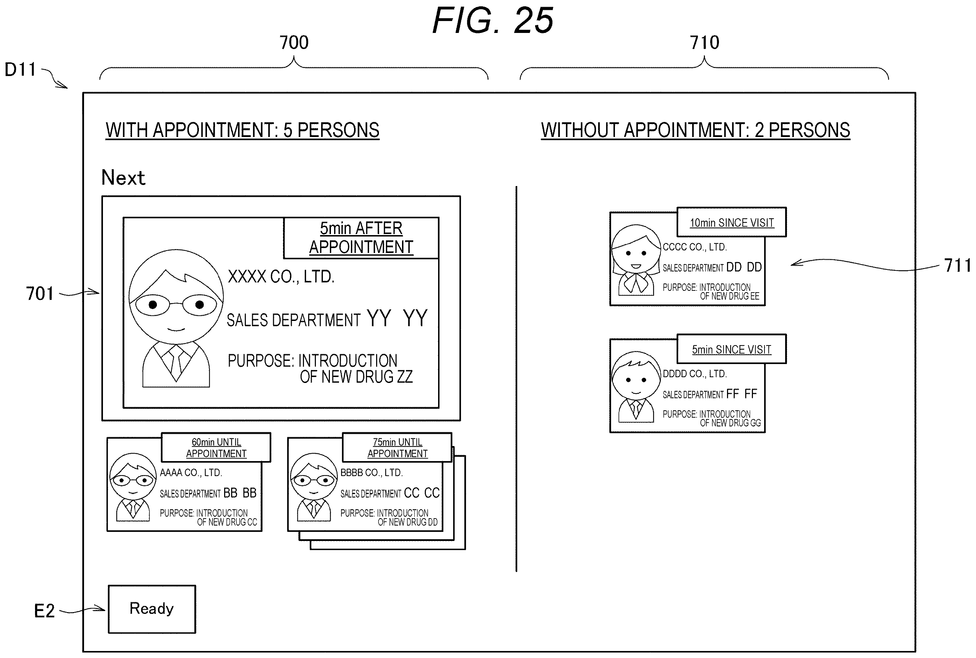

Fig. 25 is a diagram illustrating an example of a waiting room screen generated by the control unit 233. As illustrated in Fig. 25, the screen D11 includes information 700 on the salesperson with an appointment and information 710 on the salesperson without an appointment.

The control unit 233 may generate a waiting room screen including a display indicating information of each salesperson on standby by dividing the salespersons into salespersons for which an appointment is made in advance and salespersons for which an interview is desired by jumping in without an appointment.

In a case of receiving a room entry request to the waiting room for a remote interview with the customer Ua from the talker terminal 10 used by the salesperson, the control unit 233 may perform control to display information on the salesperson on the doctor side standby screen.

The control unit 233 may set the standby order of each salesperson in the order of reception of the room entry request to the waiting room.

The information 701 on the sales representative and the information 711 on the sales representative illustrated in Fig. 25 are an example of a display indicating information on the standby salesperson entering the standby room. In the example illustrated in Fig. 25, the information 701 of the sales representative and the information 711 of the sales representative are generated as display imitating a business card including a face photograph of each salesperson. Note that the display format of the display information indicating the information of the salesperson is not limited to the example illustrated in Fig. 25. For example, the display indicating the information of the salesperson may be only character information or only image information.

Furthermore, as illustrated in Fig. 25, the information 701 on the sales representative and the information 711 on the sales representative may include information on elapsed time or remaining time from the time of the appointment or the visit time of each salesperson as a starting point.

Furthermore, the information 701 on the sales representative and the information 711 on the sales representative may include information related to an affiliation organization, a position, and the like of each salesperson.

In addition, the information 701 on the sales representative and the information 711 on the sales representative may include information on a purpose for which each salesperson wants to have an interview with the customer Ua, information on medicines handled by each salesperson, a specialized region, and the like.

Furthermore, the control unit 233 may receive, on a doctor side standby screen such as the screen D11, a setting operation of the priority order of the salesperson to be notified in a case where the customer Ua enters the interview start enabled state.

More specifically, for example, in a case where the communication unit 210 receives, from the talker terminal 10A, a notification indicating that an operation of selecting one of the displays of the information on each salesperson displayed on the screen D11 has been performed, the control unit 233 may set the priority in order from the salesperson for which the selection operation has been performed and change the standby order.

In a case of receiving, from the talker terminal 10A, a notification indicating that the pressing operation for the selection button E2 has been performed on the screen D11, the control unit 233 may perform control to notify the talker terminal 10 used by each salesperson that the customer Ua can start an interview along the waiting order changed on the basis of the set priority.

As a result, the customer Ua browses the information of each salesperson on the doctor side standby screen such as the screen D11, and can perform the remote interview by giving priority to arbitrary salesperson according to the degree of interest of the customer Ua.

Alternatively, the priority setting operation described above may be performed not only by the customer Ua but also by a nurse or the like capable of operating the talker terminal 10A.

Furthermore, in a case where the setting operation of the priority is not performed by the customer Ua, the control unit 233 may automatically set the priority on the basis of information such as the presence or absence of an appointment for each salesperson, the appointed time of the appointment, and the elapsed time since each salesperson entered the standby room.

### (Waiting Time and Related Information Notification Function)

The control unit 233 according to the present embodiment may perform control to notify a salesperson who wishes to have a remote interview with the customer Ua and is on standby of an indication of the current number of salespersons on standby and the waiting time.

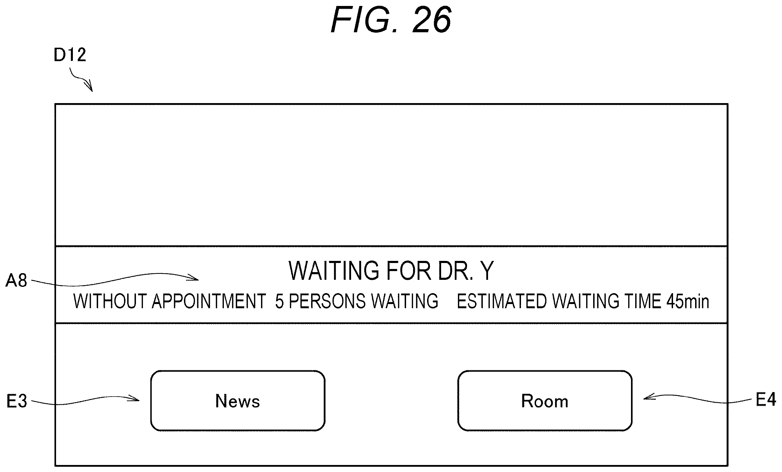

Fig. 26 is a diagram illustrating an example of a sales side standby screen generated by the control unit 233. As illustrated in Fig. 26, the screen D12 includes a notification display A8, a selection button E3, and a selection button E4.

The control unit 233 may generate a sales side standby screen including a notification word such as the notification display A8 for each salesperson on standby. The control unit 233 may notify each salesperson of information such as a current waiting time by performing control to cause the communication unit 210 to transmit and display the sales side standby screen to the talker terminal 10 used by each salesperson.

As a result, each salesperson can effectively utilize the waiting time for the remote interview, such as making a decision to perform another operation until the waiting time elapses.

Furthermore, the control unit 233 may perform control to notify the salesperson on standby of various types of information regarding the customer Ua, such as the field of interest of the customer Ua or the event information of the hospital of the customer Ua.

For example, in a case where a notification indicating that the pressing operation of the selection button E3 is detected on the screen D12 illustrated in Fig. 26 is received from the talker terminal 10, the control unit 233 may perform control to transmit a screen displaying various types of information regarding the customer Ua to the talker terminal 10.

As a result, the salesperson on standby can browse information regarding the customer Ua that is likely to be a hot topic in the remote interview until the waiting time elapses.

In addition, the control unit 233 may perform control to notify each salesperson that the waiting time has changed in a case where the waiting time of each salesperson has changed, for example, by performing an operation of setting the priority of the salesperson on standby on the doctor side standby screen.

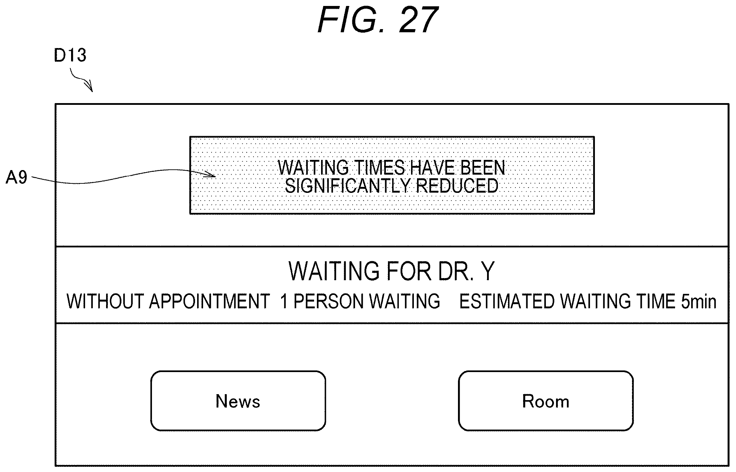

Fig. 27 is a diagram illustrating an example of a sales side standby screen generated by the control unit 233 and a notification display regarding a waiting time.

The control unit 233 may perform control to notify each salesperson of the change in the waiting time by performing a notification display such as the notification display A9 on the screen D13, for example.

### (Information Exchange Function Between Salespersons)

Furthermore, the control unit 233 according to the present embodiment may provide a function of enabling information exchange between salespersons in a case where the salespersons on standby wish to do so.

More specifically, for example, in a case of receiving, from the talker terminal 10, a notification indicating that the pressing operation for the selection button E4 has been performed on the sales side standby screen described above with reference to Fig. 26, the control unit 233 may determine that the salesperson using the talker terminal 10 desires to exchange information with another salesperson.

In a case where there is a salesperson determined to wish to exchange information, the control unit 233 may generate an information exchange desiring person standby screen displaying information on the salesperson.

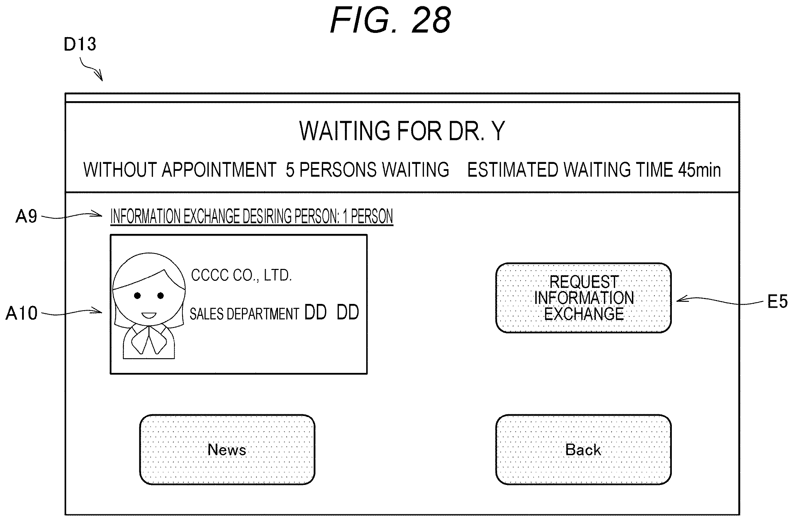

Fig. 28 is a diagram illustrating an example of an information exchange desiring person standby screen generated by the control unit 233. As illustrated in Fig. 28, the screen D13 includes a notification display A9, a notification display A10, and a selection button E5.

The control unit 233 may generate an information exchange desiring person standby screen including a notification display indicating the number of salespersons who have performed the operation for desiring information exchange as in the notification display A9.

In addition, the control unit 233 may generate an information exchange desiring person standby screen including a notification display indicating information of a salesperson that has performed an operation for desiring information exchange as in the notification display A10.

The control unit 233 may perform control to cause the communication unit 210 to transmit and display the data of the information exchange desiring person standby screen to the talker terminal 10 used by the salesperson determined to desire the information exchange.

In addition, in a case of receiving, from the talker terminal 10, an operation of selecting any one of the salespersons displayed as the information exchange desiring person on the information exchange standby screen such as the screen D13 and a notification indicating that the selection operation of the selection button E5 has been performed, the control unit 233 may perform control to notify the selected salesperson.

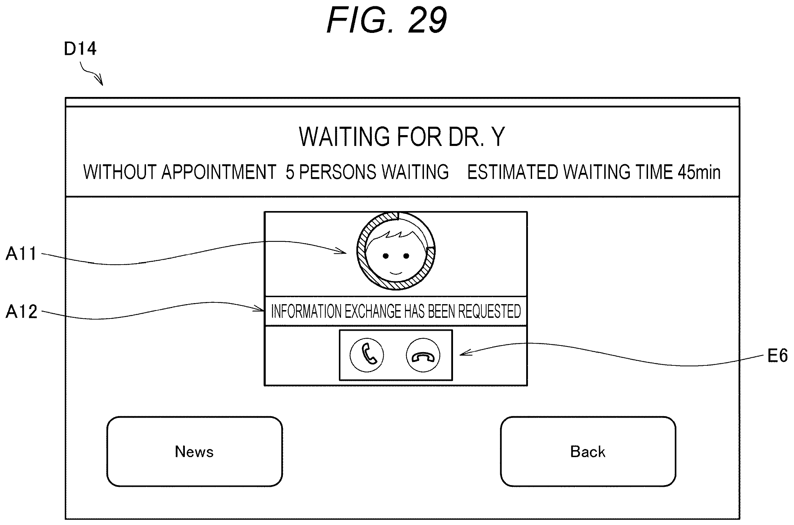

Fig. 29 is a diagram illustrating an example of an information exchange wish notification screen generated by the control unit 233. As illustrated in Fig. 29, the screen D14 includes a notification display A11, a notification display A12, and a selection button E6.

The control unit 233 may generate an information exchange wish notification screen including a display indicating a time limit for determining whether or not to respond to the information exchange wish request, like the notification display A11.

In addition, the control unit 233 may generate an information exchange wish notification screen including a display indicating that an information exchange wish request has been notified from another salesperson, like the notification display A12.

In a case where an operation to start a call is performed on the selection button E6 before the time limit indicated by the notification display A11 elapses, the control unit 233 may perform control to start a call between the salesperson requesting the information exchange and the selected salesperson.

In a case where the operation to start the call is not performed on the selection button E6 until the time limit indicated by the notification display A11 elapses, the control unit 233 may not start the call between the salesperson requesting the information exchange and the selected salesperson.

By performing the processing as described above, the salesperson waiting for the start of the remote interview with the customer Ua can exchange information with other salespersons. Therefore, each salesperson can more effectively utilize the waiting time.

Note that the information exchange desiring person standby screen described above with reference to Fig. 28 is an example, and the display format of the information exchange desiring person standby screen generated by the control unit 233 is not limited to such an example.

For example, the control unit 233 may generate a video of a virtual space imitating the waiting room, including display of an avatar indicating each salesperson, as the information exchange desiring person standby screen.

### (Notification Control According to Free Time of Doctor)

Furthermore, in a case where the customer Ua accesses the doctor side standby screen by performing an operation on the talker terminal 10A, the control unit 233 according to the present embodiment may perform control to notify the talker terminal 10 used by the salesperson set in advance as the notification destination.

Alternatively, in a case where the customer Ua accesses the doctor side standby screen on the talker terminal 10A and performs an operation of notifying that an interview is possible to the salesperson set in advance as the notification destination, the control unit 233 may perform control to notify the talker terminal 10 used by the salesperson.

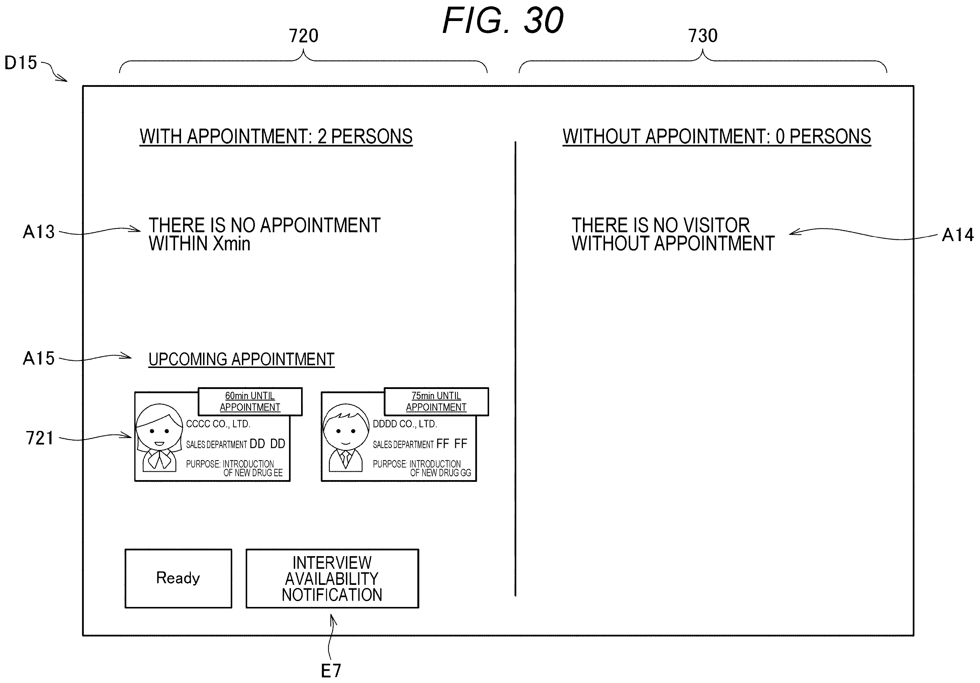

Fig. 30 is a diagram illustrating another example of the doctor side standby screen generated by the control unit 233. As illustrated in Fig. 30, the screen D15 includes information 720 on an appointed salesperson and information 730 on an unappointed salesperson.

In the example illustrated in Fig. 30, it is assumed that there is no salesperson on standby at present. In this case, the control unit 233 may cause the display such as the notification display A13 and the notification display A14 to be displayed on the doctor side standby screen.

In addition, the control unit 233 may display, on the doctor side standby screen, information on the salesperson with the latest appointment starting from the current time, such as the notification display A15 and the information 721 on the sales representative.

In a case where the pressing operation of the selection button E7 is performed, the control unit 233 may perform control to notify the talker terminal 10 used by the salesperson set in advance as the notification destination of the fact that the customer Ua can currently have an interview.

Note that, in a case where there is a plurality of salespersons set as notification destinations in advance, the control unit 233 may receive the setting of the notification order by the customer Ua.

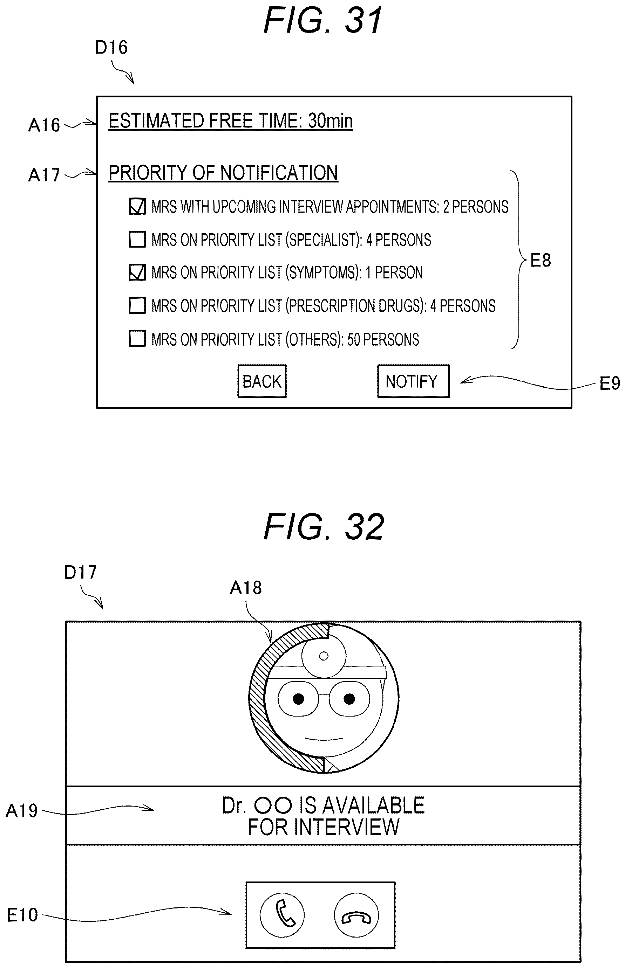

Fig. 31 is a diagram illustrating an example of a notification priority setting screen generated by the control unit 233.

The control unit 233 may calculate a guide of the free time of the customer Ua starting from the current time on the basis of information such as an examination schedule of the doctor. Furthermore, the control unit 233 may notify the customer Ua of the estimated calculated free time by a display such as a notification display A16.

In addition, the control unit 233 may display information obtained by grouping salespersons set as notification destinations in advance on the notification priority setting screen as in the notification display A17.

The control unit 233 may determine the order of the notification destinations by giving priority to the salespersons classified into the group for which the selection operation by the customer Ua has been performed on the selection button E8.

In a case where the pressing operation of the selection button E9 is performed, the control unit 233 may perform notification control to the salesperson as the notification destination according to the determined order.

Fig. 32 is a diagram illustrating an example of a notification screen generated by the control unit 233, the notification screen indicating that the doctor can perform an interview. As illustrated in Fig. 32, the screen D17 includes a notification display A18, a notification display A19, and a selection button E10.

The control unit 233 may generate a display indicating a time limit for determining whether or not to start an interview with the customer Ua as in the notification display A18.

In addition, the control unit 233 may notify the salesperson that the customer Ua can have an interview at present by wording such as the notification display A19, for example.

In a case where a call start operation with the customer Ua is performed on the talker terminal 10 that has received the notification screen such as the screen D17 on the selection button E17, the control unit 233 may notify the customer Ua that the salesperson using the talker terminal 10 has received a request for an interview with the customer Ua.

The control unit 233 may display the information on the salesperson for which the call start operation with the customer Ua has been performed in addition to the display of the salesperson for which an appointment is made on the doctor side standby screen as described above with reference to Fig. 30.

Note that the control unit 233 may set the upper limit number of salesperson for which the customer Ua can have an interview in accordance with a rough indication of free time of the customer Ua. In a case where the number of salespersons who have performed the call start operation with the customer Ua has reached the upper limit number after notifying the salesperson that the customer Ua can have an interview at present, the control unit 233 may perform control to notify the salesperson who has not performed the call start operation that the number of salespersons has reached the specified number.

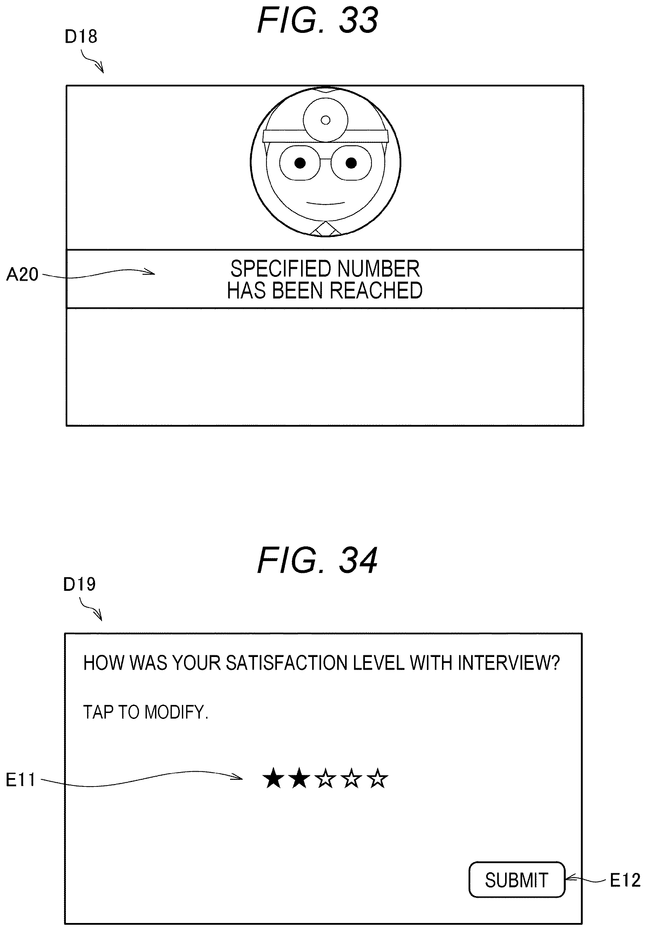

Fig. 33 is a diagram illustrating an example of a notification screen generated by the control unit 233. The control unit 233 may perform control to notify that the number of salespersons for which an interview with the customer Ua is desired has reached the upper limit number by wording such as the notification display A20 illustrated in Fig. 33.

### (Collection Processing of Evaluation After Interview)

In addition, the control unit 233 according to the present embodiment has a function of collecting information regarding the satisfaction level of the remote interview of the customer Ua after the end of the remote interview between the customer Ua and the salesperson.

More specifically, for example, the control unit 233 may estimate the transition of the satisfaction level of the customer Ua during the remote interview using the dissatisfaction estimation model described in the first embodiment above. Furthermore, the control unit 233 may estimate the comprehensive evaluation for the remote interview of the customer Ua on the basis of the average value of the satisfaction levels of the customer Ua.

Fig. 34 is a diagram illustrating an example of a post-interview evaluation questionnaire screen generated by the control unit 233. The control unit 233 may generate a screen displaying the estimation result of the comprehensive evaluation for the remote interview of the customer Ua in five levels, for example, as a selection button E11 illustrated in Fig. 34.

The control unit 233 may cause the communication unit 210 to transmit and display a post-interview evaluation questionnaire screen such as a screen D19 to the talker terminal 10A used by the customer Ua.

In addition, the control unit 233 may accept the correction of the comprehensive evaluation for the remote interview by the customer Ua by accepting the selection operation of the selection button E11 on the screen D19 displayed on the talker terminal 10A. In a case where the pressing operation for the selection button E12 is performed, the control unit 233 may receive the comprehensive evaluation of the remote interview selected on the selection button E11 from the talker terminal 10A.

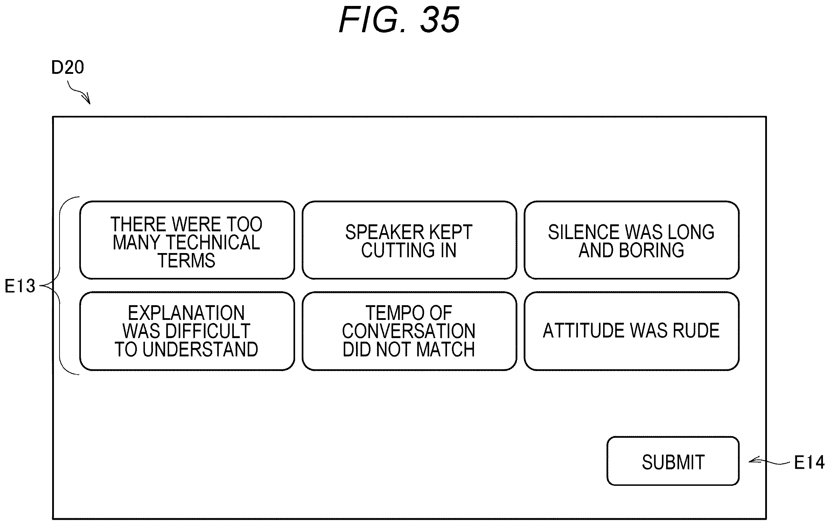

Fig. 35 is a diagram illustrating another example of the post-interview evaluation questionnaire screen generated by the control unit 233. The control unit 233 may generate a questionnaire screen of dissatisfaction items regarding the remote interview as in a screen D20 illustrated in Fig. 35.

The control unit 233 may receive the information of the dissatisfaction item selected on the selection button E13 on the screen D20 from the talker terminal 10A.

The control unit 233 may perform control to notify the talker terminal 10 used by the salesperson which is the partner of the remote interview of the comprehensive evaluation for the remote interview and the information on the dissatisfaction item received from the talker terminal 10A.

By performing such processing, the customer Ua can easily convey the evaluation and dissatisfaction items to the salespersons, as compared with a case where a remote interview is performed in person with the salesperson.

In addition, by knowing the comprehensive evaluation of the remote interview from the customer Ua and the information of the dissatisfaction item, the salesperson can review the interview and use it to improve the quality of the interview.

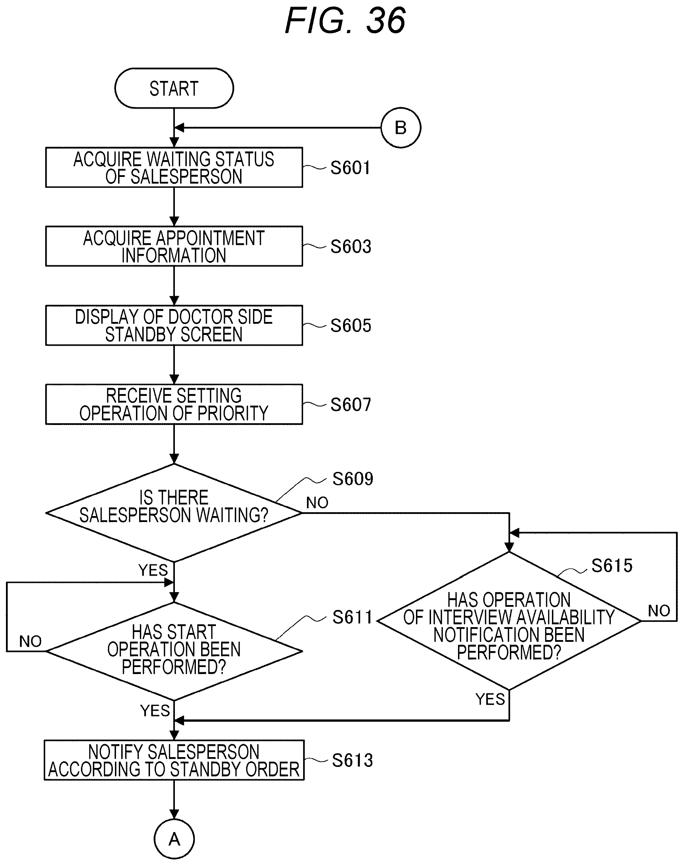

The functional configuration example of the information processing apparatus 23 according to the fourth embodiment of the present disclosure has been described above with reference to Figs. 22 to 35. Next, an operation example of the information processing system according to the fourth embodiment of the present disclosure will be described with reference to Figs. 36 to 38.

Fig. 36 is a first flowchart illustrating an operation example of the information processing system according to the fourth embodiment.

First, the control unit 233 acquires the waiting status of the salesperson entering the standby room in response to the desire for the remote interview with the customer Ua (S601).

Next, the control unit 233 acquires the appointment information between the customer Ua and the salesperson (S603).

The control unit 233 performs control to cause the talker terminal 10A to display the doctor side standby screen generated on the basis of the waiting status of the salesperson and the appointment information (S605).

On the doctor side standby screen, the control unit 233 receives a priority setting operation of the standby order of the salespersons, and changes the standby order (S607).

In a case where there is a salesperson on standby (S609/YES), the process proceeds to S611.

In a case where there is no salesperson on standby (S609/NO), the process proceeds to S615.

In S611, the control unit 233 determines whether or not the customer Ua has performed a call start operation for a remote interview with the salesperson (S611).

The control unit 233 waits until a call start operation is performed (S611/NO).

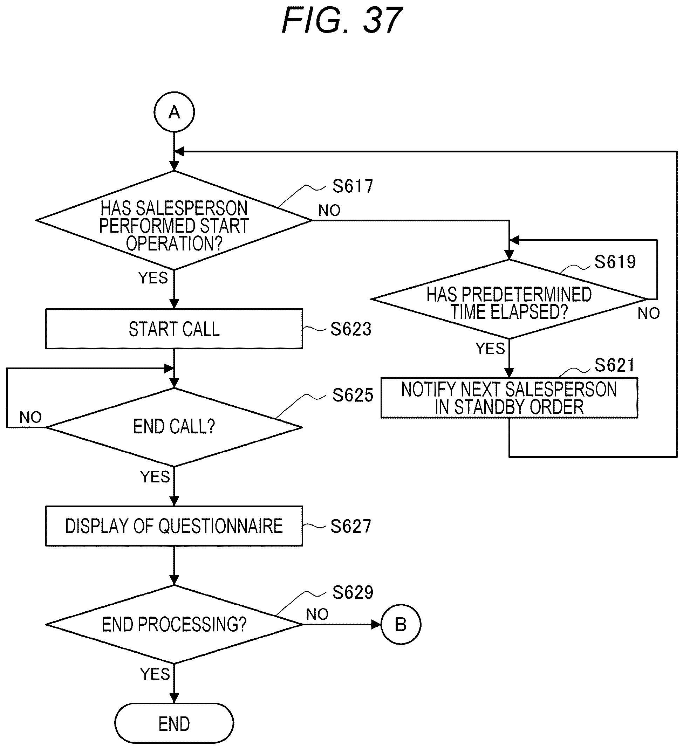

In a case where the call start operation has been performed (S611/YES), the control unit 233 performs control to notify the salespersons according to the standby order (S613). Next, the process proceeds to S617 in Fig. 37.

In S615, the control unit 233 determines whether or not an interview availability notification has been operated by the customer Ua (S615).

The control unit 233 waits until the interview availability notification is operated (S615/NO).

In a case where the interview availability notification operation has been performed (S615/YES), the process proceeds to S613.

Fig. 37 is a second flowchart illustrating an operation example of the information processing system according to the fourth embodiment.

After the processing of S613 described with reference to Fig. 36, the control unit 233 determines whether or not a call start operation with the customer Ua has been performed by the salesperson to which the notification has been given (S617).

In a case where the call start operation is not performed (S617/NO), the control unit 233 waits until a certain period of time elapses (S619/NO).

When the certain period of time has elapsed (S619/YES), the control unit 233 performs control to notify the salesperson in the next standby order (S621). Next, the control unit 233 proceeds to the processing of S617 again.

In a case where the call start operation has been performed in S617 (S617/YES), the control unit 233 performs control to start a call with the salesperson that has performed the call start operation with the customer Ua (S623).

The control unit 233 waits until an operation to end the call is performed (S625/NO).

When the operation to end the call is performed (S625/YES), the control unit 233 performs control to display a questionnaire regarding the satisfaction level of the remote interview on the talker terminal 10A (S627).

Next, the information processing apparatus 23 repeats the processing of S601 to S609 again until an operation to end the series of processing is performed (S629/NO).

In a case where an operation to end the series of processing has been performed, the information processing apparatus 23 ends the processing (S629/YES).

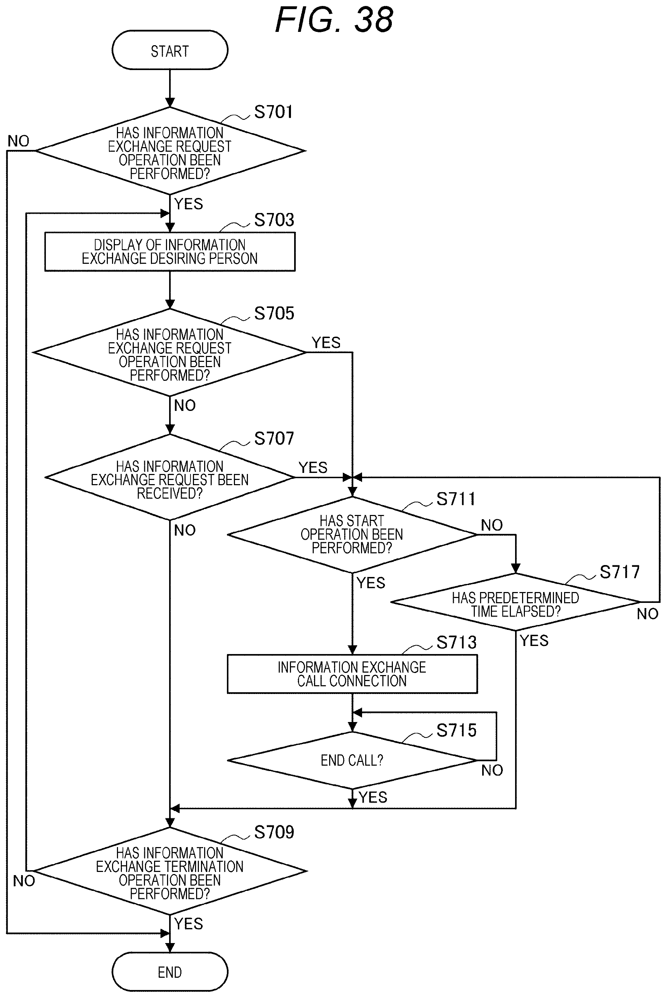

Next, an operation example of the present information processing system related to an information exchange function between salespersons performed in parallel with the operation example described above with reference to Figs. 36 and 37 will be described with reference to Fig. 38.

Fig. 38 is a flowchart for explaining an operation example of the present information processing system related to an information exchange function between salespersons according to the fourth embodiment of the present disclosure. The control unit 233 may operate according to the flow illustrated in Fig. 38 in a case where there is a salesperson on standby desiring a remote interview with the customer Ua.

On the doctor side standby screen, the control unit 233 determines whether or not an operation for which information exchange is desired has been performed by the salesperson on standby (S701).

In a case where the operation for which information exchange is desired is not performed (S701/NO), the control unit 233 ends the series of processing.

In a case where the operation requesting the information exchange is performed (S701/YES), the control unit 233 performs control to display the information of the other information exchange desiring person on the talker terminal 10 used by the salesperson for which the information exchange is requested (S703).

Next, in a case where an operation of requesting the salesperson to exchange information with another information exchange desiring person is performed by the salesperson that desires the information exchange (S705/YES), the process proceeds to S711.

In a case where the operation of requesting the salesperson to exchange information with another information exchange desiring person has not been performed (S705/NO), the process proceeds to S707.

In S707, in a case where the information exchange request has not been received from another information exchange desiring person (S707/NO), the process proceeds to S709.

In S709, in a case where the information exchange termination operation is performed by the salesperson that performed the operation desiring information exchange (S709/YES), the control unit 233 ends the series of processing.

In a case where the information exchange termination operation has not been performed (S709/NO), the control unit 233 repeats the processing of S701 and subsequent steps.

In S711, in a case where a call start operation has been performed by both the salesperson requesting information exchange and the salesperson receiving the information exchange request (S711/YES), the control unit 233 performs control to start connection of a call for information exchange (S713).

Next, the control unit 233 waits until an operation to end the call for information exchange is performed (S715/NO).

In a case where the operation to end the call for information exchange has been performed (S715/YES), the process proceeds to S709.

In S711, in a case where the call start operation is not performed by one or both of the salesperson that has requested the information exchange and the salesperson that has received the information exchange request (S711/NO), the control unit 233 determines whether or not a certain period of time has elapsed since the request was made (S717).

In a case where the certain period of time has not elapsed (S717/NO), the control unit 233 repeats the processing of S711 and subsequent steps again.

In a case where the certain period of time has elapsed (S717/YES), the process proceeds to S709.

The operation example of the present information processing system related to the information exchange function between salespersons in the fourth embodiment of the present disclosure has been described above with reference to Fig. 38. Note that, in the above description, an example has been described in which the control unit 233 provides a plurality of functions including the doctor's call available state notification function, the salesperson information display and priority order setting function, the waiting time and related information notification function, the salesperson information exchange function, notification control according to the free time of the doctor, and the collection processing of evaluation after interview. However, the present disclosure is not limited to such an example. For example, each function described above may be individually provided. In addition, two or more of the above-described functions may be provided in combination. Furthermore, the processing of each function is not necessarily performed in the above-described order, and can be flexibly changed.

### <5. Hardware Configuration Example>

The embodiments of the present disclosure have been described above. Next, a hardware configuration example common to the talker terminal 10, the information processing apparatus 20, the information processing apparatus 21, the information processing apparatus 22, and the information processing apparatus 23 according to the embodiment of the present disclosure will be described.

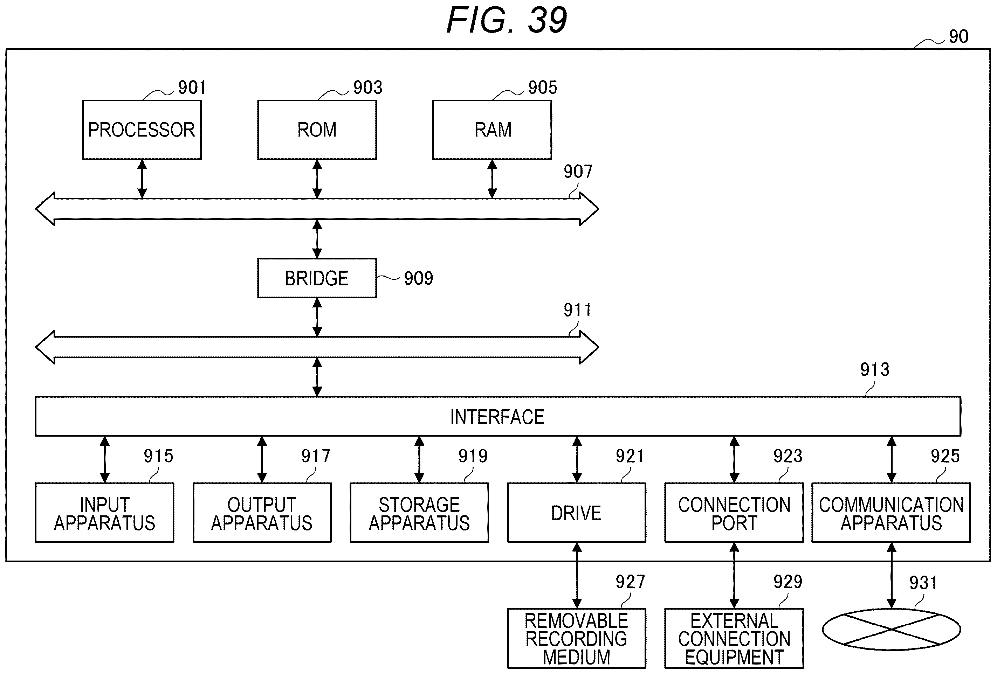

Fig. 39 is a block diagram illustrating a hardware configuration 90 according to one embodiment of the present disclosure.

The hardware configuration 90 can be applied to the talker terminal 10, the information processing apparatus 20, the information processing apparatus 21, the information processing apparatus 22, and the information processing apparatus 23.

As illustrated in Fig. 39, the hardware configuration 90 includes, for example, a processor 901, a read only memory (ROM) 903, a random access memory (RAM) 905, a host bus 907, a bridge 909, an external bus 911, an interface 913, an input apparatus 915, an output apparatus 917, a storage apparatus 919, a drive 921, a connection port 923, and a communication apparatus 925. Note that the hardware configuration illustrated here is an example, and some of the components may be omitted. In addition, components other than the components illustrated here may be further included.

### (Processor 901)

The processor 901 functions as, for example, an arithmetic processing apparatus and a control apparatus, and controls the overall operation of each component or a part thereof on the basis of various programs recorded in the ROM 903, the RAM 905, the storage apparatus 919, or a removable recording medium 927.

### (ROM 903 and RAM 905)

The ROM 903 is a means that stores a program read by the processor 901 and/or data used for calculation and the like. The RAM 905 temporarily or permanently stores, for example, a program read by the processor 901 and/or various parameters and the like that appropriately change when the program is executed.

### (Host Bus 907, Bridge 909, External Bus 911, and Interface 913)

The processor 901, the ROM 903, and the RAM 905 are mutually connected via, for example, the host bus 907 capable of high-speed data transmission. Meanwhile, the host bus 907 is connected to the external bus 911 having a relatively low data transmission speed via the bridge 909, for example. In addition, the external bus 911 is connected to various components via the interface 913.

### (Input Apparatus 915)

As the input apparatus 915, for example, a mouse, a keyboard, a touch panel, a button, a switch, a lever, and the like are used. Furthermore, as the input apparatus 915, a remote controller capable of transmitting a control signal using infrared rays or other radio waves may be used. Furthermore, the input apparatus 915 includes a voice input apparatus such as a microphone.

Furthermore, the input apparatus 915 may include an imaging apparatus and a sensor. The imaging apparatus is, for example, an apparatus that images a real space using various members such as an imaging element such as a charge coupled device (CCD) or a complementary metal oxide semiconductor (CMOS), and a lens for controlling image formation of a subject image on the imaging element, and generates a captured image. The imaging apparatus may capture a still image or may capture a moving image.

Examples of the sensor include various sensors such as a distance measurement sensor, an acceleration sensor, a gyro sensor, a geomagnetic sensor, a vibration sensor, an optical sensor, and a sound sensor. The sensor acquires information regarding the state of the hardware configuration 90 itself, such as the posture of the housing of the hardware configuration 90, or information regarding the surrounding environment of the hardware configuration 90, such as brightness or noise around the hardware configuration 90. In addition, the sensor may also include a GNSS sensor that receives the GNSS signal and measures the latitude, longitude, and altitude of the apparatus. The sensing data acquired by the various sensors may be used as the sensing data regarding the above-described talker.

### (Output Apparatus 917)

The output apparatus 917 includes various vibration devices capable of visually or audibly notifying the user of acquired information, such as a display apparatus such as a cathode ray tube (CRT), a liquid crystal display (LCD), or an organic electroluminescence (EL), an audio output apparatus such as a speaker and a headphone, a printer, a mobile phone, or a facsimile, for example.

### (Storage Apparatus 919)

The storage apparatus 919 is an apparatus for storing various data. As the storage apparatus 919, for example, a magnetic storage device such as a hard disk drive (HDD), a semiconductor storage device, an optical storage device, a magneto-optical storage device, or the like is used.

### (Drive 921)

The drive 921 is, for example, an apparatus that reads information recorded on the removable recording medium 927 such as a magnetic disk, an optical disk, a magneto-optical disk, or a semiconductor memory, or writes information to the removable recording medium 927.

### (Removable Recording Medium 927)

The removable recording medium 927 is, for example, a DVD medium, a Blu-ray (registered trademark) medium, an HD DVD medium, various semiconductor storage media, or the like. Of course, the removable recording medium 927 may be, for example, an IC card on which a non-contact IC chip is mounted, electronic equipment, or the like.

### (Connection Port 923)

The connection port 923 is a port for connecting external connection equipment 929 such as a universal serial bus (USB) port, an IEEE1394 port, a small computer system interface (SCSI) port, an RS-232C port, or an optical audio terminal, for example.

### (External Connection Equipment 929)

The external connection equipment 929 is, for example, a printer, a portable music player, a digital camera, a digital video camera, an IC recorder, or the like.

### (Communication Apparatus 925)

The communication apparatus 925 is a communication device for connecting to a network, and is, for example, a communication card for wired or wireless local area network (LAN), Bluetooth (registered trademark), or wireless USB (WUSB), a router for optical communication, a router for asymmetric digital subscriber line (ADSL), a modem for various types of communication, or the like.

### <6. Summary>

Although the preferred embodiments of the present disclosure have been described in detail with reference to the accompanying drawings above, the technical scope of the present disclosure is not limited to such examples. It is obvious that a person having ordinary knowledge in the technical field of the present disclosure can conceive various changes or modifications within the scope of the technical idea described in the claims, and it is naturally understood that these also belong to the technical scope of the present disclosure.

For example, in the above embodiments, an example in which the present disclosure is applied to a remote interview performed between one customer Ua and one salesperson Ub has been described. However, the application destination of the present disclosure is not limited to such an example. The information processing system according to the present disclosure can also be applied to, for example, a remote interview performed between one or more customers and one or more salespersons.

Furthermore, in the above-described embodiments, an example has been described in which the control of the notification to the talker by the information processing apparatus 20, the information processing apparatus 21, the information processing apparatus 22, and the information processing apparatus 23 is performed by the generation processing and the transmission processing of the notification display output on the display unit of the talker terminal 10. However, the present disclosure is not limited to such an example. For example, the information processing apparatus 20, the information processing apparatus 21, the information processing apparatus 22, and the information processing apparatus 23 may control the notification to the talker by performing processing of generating voice data related to the notification content to the talker, and transmitting and outputting the voice data to the talker terminal 10.

Furthermore, the effects described in the present specification are merely illustrative or exemplary, and are not restrictive. That is, the technology according to the present disclosure can exhibit other effects obvious to those skilled in the art from the description of the present specification together with or instead of the above effects.

Note that the following configurations also belong to the technical scope of the present disclosure.
(1) An information processing apparatus including
   a control unit that performs control to notify a talker of a state of the talker related to a degree of a satisfaction level in accordance with the satisfaction level regarding a call of the talker, the satisfaction level being estimated on the basis of sensing data regarding the talker performing the call.
(2) The information processing apparatus according to (1), in which
   the talker includes a first talker and a second talker who performs sales activities of either or both of a product and a service for the first talker, and
   the control unit performs control to notify the second talker of a state of the second talker related to a degree of a satisfaction level of the first talker in accordance with the satisfaction level of the first talker with respect to the call, the satisfaction level being estimated on the basis of sensing data regarding the first talker.
(3) The information processing apparatus according to (2), in which
   the control unit performs control to notify the second talker of the state of the second talker in a case where the satisfaction level of the first talker is lower than a reference value on the basis of sensing data regarding the second talker.
(4) The information processing apparatus according to (3), in which
   the control unit is configured to: analyze a state of the second talker on the basis of the sensing data regarding the second talker in a case where the satisfaction level of the first talker is lower than a reference value; and
   output a state of the second talker obtained as a result of analysis as a dissatisfaction cause state.
(5) The information processing apparatus according to (3), in which
   the control unit performs control to notify the second talker of a state of the second talker in a predetermined time section from a time at which the satisfaction level of the first talker is lower than a reference value.
(6) The information processing apparatus according to (4), in which
   the control unit performs control to notify the second talker of the dissatisfaction cause state in a case where the control unit detects that the state of the second talker is the dissatisfaction cause state on the basis of sensing data regarding the second talker while the call is being made.
(7) The information processing apparatus according to (6), in which
   the control unit performs control to notify the second talker of the satisfaction level of the first talker being lower than the reference value in a case where the control unit detects that the satisfaction level of the first talker is lower than the reference value on the basis of sensing data regarding the first talker while the call is being made.
(8) The information processing apparatus according to (7), in which
   the control unit is configured to: learn a relationship between sensing data regarding the first talker and information indicating the satisfaction level of the first talker by machine learning; and
   estimate the satisfaction level of the first talker using a model obtained as a result of learning.
(9) The information processing apparatus according to (8), in which
   the control unit is configured to: learn a relationship between sensing data regarding the second talker and a state of the second talker output as the dissatisfaction cause state by machine learning; and
   detect whether or not the state of the second talker is the dissatisfaction cause state by using a model obtained as a result of learning.
(10) The information processing apparatus according to (6), in which
   the control unit is configured to: acquire a tension level of the second talker estimated on the basis of sensing data regarding the second talker;
   analyze a state of the first talker in a case where the tension level is higher than a reference value; and
   output a state of the first talker obtained as a result of analysis as a tension cause state.
(11) The information processing apparatus according to (10), in which
   the control unit is configured to: analyze a state of the first talker in a predetermined time section from a time when the tension level of the second talker is higher than a reference value; and
   output a state of the first talker obtained as a result of analysis as the tension cause state.
(12) The information processing apparatus according to (2), in which
   the control unit performs control to notify the first talker of a case where the control unit estimates that the satisfaction level of the first talker is lower than a reference value while the call is being made.
(13) The information processing apparatus according to (11), in which
   the control unit is configured to: calculate a speaking time indicating presence or absence of an utterance of each of the first talker and the second talker and a length of a time of each utterance on the basis of the sensing data; and
   perform control to notify the second talker of information regarding a length of time during which each of the first talker and the second talker is speaking on the basis of the speaking time obtained as a result of calculation.
(14) The information processing apparatus according to (13), in which
   the control unit performs control to notify the second talker of information indicating a ratio of time uttered by each of the first talker and the second talker while the call is being made on the basis of the speaking time calculated.
(15) The information processing apparatus according to (14), in which
   the control unit is configured to: determine a degree of busyness of the first talker according to a situation of a surrounding environment of the first talker estimated on the basis of sensing data regarding the first talker while the call is being made; and
   perform control to notify the second talker of information regarding busyness of the first talker according to a result of determination.
(16) The information processing apparatus according to (15), in which
   the control unit generates a call summary screen including information indicating the satisfaction level of the first talker and the dissatisfaction cause state of the second talker between start and end of the call.
(17) The information processing apparatus according to (1), in which
   the sensing data regarding the talker includes any one or both of time-series data of a video around the talker including a face of the talker as a subject and time-series data of a sound around the talker including a voice of the talker.
(18) The information processing apparatus according to (8), in which
   the sensing data regarding the talker includes a biological signal generated by a biological phenomenon of the talker.
(19) A program for causing a computer to function as
   a control unit that performs control to notify a talker of a state of the talker related to a degree of a satisfaction level in accordance with the satisfaction level regarding a call of the talker, the satisfaction level being estimated on the basis of sensing data regarding the talker performing the call.
(20) An information processing method executed by a computer, including
   performing control to notify a talker of a state of the talker related to a degree of a satisfaction level in accordance with the satisfaction level regarding a call of the talker, the satisfaction level being estimated on the basis of sensing data regarding the talker performing the call.

### REFERENCE SIGNS LIST

- 10: Talker terminal
- 110: Communication unit
- 120: Sensor unit
- 130: Control unit
- 140: Output unit
- 150: Input unit
- 20: Information processing apparatus
- 210: Communication unit
- 220: Storage unit
- 230: Control unit
- 21: Information processing apparatus
- 22: Information processing apparatus
- 23: Information processing apparatus
- 5: Network

## Claims

1. An information processing apparatus comprising
a control unit that performs control to notify a talker of a state of the talker related to a degree of a satisfaction level in accordance with the satisfaction level regarding a call of the talker, the satisfaction level being estimated on a basis of sensing data regarding the talker performing the call.

2. The information processing apparatus according to claim 1,
wherein
the talker includes a first talker and a second talker who performs sales activities of either or both of a product and a service for the first talker, and
the control unit performs control to notify the second talker of a state of the second talker related to a degree of a satisfaction level of the first talker in accordance with the satisfaction level of the first talker with respect to the call, the satisfaction level being estimated on a basis of sensing data regarding the first talker.

3. The information processing apparatus according to claim 2,
wherein
the control unit performs control to notify the second talker of the state of the second talker in a case where the satisfaction level of the first talker is lower than a reference value on a basis of sensing data regarding the second talker.

4. The information processing apparatus according to claim 3,
wherein
the control unit is configured to: analyze a state of the second talker on a basis of the sensing data regarding the second talker in a case where the satisfaction level of the first talker is lower than a reference value; and
output a state of the second talker obtained as a result of analysis as a dissatisfaction cause state.

5. The information processing apparatus according to claim 3,
wherein
the control unit performs control to notify the second talker of a state of the second talker in a predetermined time section from a time at which the satisfaction level of the first talker is lower than a reference value.

6. The information processing apparatus according to claim 4,
wherein
the control unit performs control to notify the second talker of the dissatisfaction cause state in a case where the control unit detects that the state of the second talker is the dissatisfaction cause state on a basis of sensing data regarding the second talker while the call is being made.

7. The information processing apparatus according to claim 6,
wherein
the control unit performs control to notify the second talker of the satisfaction level of the first talker being lower than the reference value in a case where the control unit detects that the satisfaction level of the first talker is lower than the reference value on a basis of sensing data regarding the first talker while the call is being made.

8. The information processing apparatus according to claim 7,
wherein
the control unit is configured to: learn a relationship between sensing data regarding the first talker and information indicating the satisfaction level of the first talker by machine learning; and
estimate the satisfaction level of the first talker using a model obtained as a result of learning.

9. The information processing apparatus according to claim 8, wherein
the control unit is configured to: learn a relationship between sensing data regarding the second talker and a state of the second talker output as the dissatisfaction cause state by machine learning; and
detect whether or not the state of the second talker is the dissatisfaction cause state by using a model obtained as a result of learning.

10. The information processing apparatus according to claim 6,
wherein
the control unit is configured to: acquire a tension level of the second talker estimated on a basis of sensing data regarding the second talker;
analyze a state of the first talker in a case where the tension level is higher than a reference value; and
output a state of the first talker obtained as a result of analysis as a tension cause state.

11. The information processing apparatus according to claim 10,
wherein
the control unit is configured to: analyze a state of the first talker in a predetermined time section from a time when the tension level of the second talker is higher than a reference value; and
output a state of the first talker obtained as a result of analysis as the tension cause state.

12. The information processing apparatus according to claim 2,
wherein
the control unit performs control to notify the first talker of a case where the control unit estimates that the satisfaction level of the first talker is lower than a reference value while the call is being made.

13. The information processing apparatus according to claim 11,
wherein
the control unit is configured to: calculate a speaking time indicating presence or absence of an utterance of each of the first talker and the second talker and a length of a time of each utterance on a basis of the sensing data; and
perform control to notify the second talker of information regarding a length of time during which each of the first talker and the second talker is speaking on a basis of the speaking time obtained as a result of calculation.

14. The information processing apparatus according to claim 13,
wherein
the control unit performs control to notify the second talker of information indicating a ratio of time uttered by each of the first talker and the second talker while the call is being made on a basis of the speaking time calculated.

15. The information processing apparatus according to claim 14,
wherein
the control unit is configured to: determine a degree of busyness of the first talker according to a situation of a surrounding environment of the first talker estimated on a basis of sensing data regarding the first talker while the call is being made; and
perform control to notify the second talker of information regarding busyness of the first talker according to a result of determination.

16. The information processing apparatus according to claim 15,
wherein
the control unit generates a call summary screen including information indicating the satisfaction level of the first talker and the dissatisfaction cause state of the second talker between start and end of the call.

17. The information processing apparatus according to claim 1,
wherein
the sensing data regarding the talker includes any one or both of time-series data of a video around the talker including a face of the talker as a subject and time-series data of a sound around the talker including a voice of the talker.

18. The information processing apparatus according to claim 8,
wherein
the sensing data regarding the talker includes a biological signal generated by a biological phenomenon of the talker.

19. A program for causing a computer to function as
a control unit that performs control to notify a talker of a state of the talker related to a degree of a satisfaction level in accordance with the satisfaction level regarding a call of the talker, the satisfaction level being estimated on a basis of sensing data regarding the talker performing the call.

20. An information processing method executed by a computer, comprising
performing control to notify a talker of a state of the talker related to a degree of a satisfaction level in accordance with the satisfaction level regarding a call of the talker, the satisfaction level being estimated on a basis of sensing data regarding the talker performing the call.
